# EUROPÄISCHE PATENTSCHRIFT

(11) **EP 2 729 387 B1**
(45) Veröffentlichungstag und Bekanntmachung des Hinweises auf die Patenterteilung: **29.08.2018**
(21) Anmeldenummer: 12750980.0
(22) Anmeldetag: 06.07.2012
(51) Int. Cl.: B65G 1/02, B65G 1/06, B65G 17/12

(54) **REGALLAGERSYSTEM**
RACK STORAGE SYSTEM
SYSTÈME D'ENTREPOSAGE À RAYONNAGES

(30) Priorität: 08.07.2011 AT 10042011; 08.07.2011 AT 10062011; 28.09.2011 AT 14052011
(43) Veröffentlichungstag der Anmeldung: 14.05.2014
(73) Patentinhaber: TGW Mechanics GmbH, 4600 Wels (AT)
(72) Erfinder: WOLKERSTORFER, Christoph, A-4600 Wels (AT); ANGLEITNER, Karl, A-4600 Wels (AT)
(74) Vertreter: Burger, Hannes
(86) Internationale Anmeldenummer: PCT/AT2012/050094
(87) Internationale Veröffentlichungsnummer: WO 2013/006879

(56) Entgegenhaltungen:
- EP-A1- 0 770 565
- EP-A2- 1 422 169
- WO-A1-2011/020836
- WO-A2-2012/083333
- DE-A1- 4 217 084
- DE-A1-102004 031 581
- DE-U1-202011 102 596
- FR-A- 1 286 664
- US-A- 3 189 138
- US-A- 5 927 926
- US-A1- 2008 247 848
- US-A1- 2010 316 468

## Beschreibung

Die Erfindung betrifft ein Regallagersystem mit zumindest einem autonomen Förderfahrzeug zum Transport von Ladegütern, einem Regallager für die Ladegüter mit einem ersten Lagerregal und einem zweiten Lagerregal sowie einer sich zwischen diesen erstreckenden Regalgasse, welche Lagerregale parallel angeordnet sind und in übereinander liegenden Regalebenen jeweils nebeneinander Stellplätze für die Ladegüter ausbilden, einer ersten Ladegut-Manipulationsvorrichtung, einer zweiten Ladegut-Manipulationsvorrichtung, einer Pufferzone einerseits zwischen der ersten Ladegut-Manipulationsvorrichtung und dem ersten Lagerregal und andererseits zwischen der zweiten Ladegut-Manipulationsvorrichtung und dem zweiten Lagerregal, wobei das erste Lagerregal und das zweite Lagerregal in den übereinander liegenden Regalebenen in Richtung der Regalgasse verlaufende vordere und hintere Längstraversen umfassen, und wobei das autonome Förderfahrzeug zum Transport von Ladegütern zu bzw. von Stellplätzen in den Lagerregalen auf den einander gegenüberliegenden, vorderen Längstraversen verfahrbar ist, und wobei die vorderen und/oder hinteren Längstraversen in Richtung ihrer Längserstreckung zumindest einen Montageabschnitt umfassen, in welchem Montageschnittstellen vorbereitet sind, und eine horizontale oder vertikale Montageebene für die Pufferfördervorrichtung ausgebildet ist.

Die WO 2011/020836 A1 offenbart ein Regallagersystem nach dem Oberbegriff des Anspruchs 1. Die WO 2012/155169 A1, welche unter Artikel 54(3) EPÜ fällt, offenbart ein Regallagersystem mit einem ersten Lagerregal, zweiten Lagerregal, Einlagerungs-Paternoster, Auslagerungs-Paternoster und in der jeweiligen Regalebene angeordneten Umsetzvorrichtungen, welche einerseits zwischen dem Einlagerungs-Paternoster und dem ersten Lagerregal und andererseits zwischen dem Auslagerungs-Paternoster und dem zweiten Lagerregal vorgesehen sind, sodass Ladegüter zwischen dem jeweiligen Paternoster und der jeweiligen Umsetzvorrichtung manipuliert werden können. Die Umsetzvorrichtungen bilden einen Pufferplatz für zumindest ein Ladegut aus.

Andere Ausführungen eines Regallagersystems sind auch aus der DE 20 2009 012 490 U1, US 2011/0008137 A1, US 2011/0008138 A1, EP 1 716 060 B1 und DE 10 2009 032 406 A1 bekannt. Diese können außerdem noch Ladegut-Manipulationsvorrichtungen zum Einlagern und Auslagern von Ladegütern und in der jeweiligen Regalebene zwischen den Ladegut-Manipulationsvorrichtungen und den Lagerregalen angeordnete Pufferfördervorrichtungen sowie gegebenenfalls eine Förderfahrzeug-Hebevorrichtung umfassen. Solche Ladegut-Manipulationsvorrichtungen sind beispielweise durch an einem Vertikalmast heb- und senkbare Hubplattformen, wie in der EP 2 327 643 A1 gezeigt, oder Paternoster, wie in der US 2010/0322746 A1 gezeigt, gestaltet. Gleiches trifft auf die Förderfahrzeug-Hebevorrichtungen zu, wie in der EP 1 716 060 B1 und DE 2 114 705 A gezeigt. Nach diesem bekannten Stand der Technik werden genannte Funktionszusatzmodule, daher die Ladegut-Manipulationsvorrichtungen, Pufferfördervorrichtungen und Förderfahrzeug-Hebevorrichtung getrennt von den Längstraversen an den Regalstehern befestigt, sodass man zusätzlich Montageprofile und dgl. benötigt, was höhere Investitionskosten und einen größeren Bauraum erfordert.

Diese bekannten Regallagersysteme werden außerdem je nach Kundenanforderung konfiguriert. Das heißt, je nach Konfiguration des Regallagersystems und den erforderlichen Funktionszusatzmodulen, wie Vertikalmast mit heb- und senkbarer Hubplattform oder Paternoster, werden die Lageregale mit den Längstraversen gestaltet. Damit ist zu jeder unterschiedlichen Konfiguration eine angepasste Gestaltung der Lageregale erforderlich. Dementsprechend hoch ist der Dimensionierungsaufwand für unterschiedliche Konfigurationen und ist oftmals sogar eine Neukonstruktion nötig.

Nach der DE 20 2011 102 596 U1 und EP 1 422 169 A2 wird eine Regalkonstruktion beschrieben, welche einen vorderen Regalsteher und einen hinteren Regalsteher sowie autonome Förderfahrzeuge zum Transport von Ladegütern zu bzw. von Stellplätzen in den Lagerregalen sowie sich zwischen den vorderen und hinteren Längstraversen erstreckende Querträger umfasst. In die Regalkonstruktion integrierte Pufferfördervorrichtungen werden nicht beschrieben.

Der vorliegenden Erfindung liegt die Aufgabe zugrunde, ein Regallagersystem mit zumindest einem autonomen Förderfahrzeug, insbesondere Einebenenregalbediengerät, zu schaffen, bei welchem sich eine weitgehende Standardisierung des Aufbaus im Regallagersystem erreichen lässt.

Die Aufgabe der Erfindung wird durch ein Regallagersystem nach Anspruch 1 gelöst. Die Montagebohrungen oder Aussparungen können in einem beliebigen Rasterabstand vorgesehen werden, beispielsweise als Lochreihe, was die Flexibilität in der Wahl von Montagepositionen erhöht. Soll eine hohe Variabilität an Montagepositionen gegeben sein, so muss bloß der Rasterabstand kleiner gewählt werden. Andererseits kann im Montageabschnitt auch eine sich Längsrichtung der Längstraverse(n) erstreckende Profilnut vorgesehen werden. Die Montageschnittstellen können aber auch Montageelemente ausbilden, welche als Rastnasen oder Rastausnehmungen gestaltet sind, welche mit komplementär ausgebildeten Montageelementen an den Pufferfördervorrichtungen (Funktionszusatzmodulen), insbesondere formschlüssig ineinander einhaken. Die Pufferfördervorrichtungen (Funktionszusatzmodule) des Regallagersystems können unmittelbar an der Längstraverse und an den zur Umsetzung deren Funktion optimalen Stellen montiert werden.

Das Regallagersystem stellt mit seinen Lagerregalen ein standardisiertes Regallager zur Verfügung, zu welchem vorkonfektionierte Pufferfördervorrichtungen (Funktionszusatzmodule) kombiniert werden können. Dadurch kann auf kundenspezifische Anfragen sehr rasch reagiert werden und verkürzen sich auch die Montagezeiten.

Ferner kann der Konstruktionsaufwand wiederum durch die Verwendung von standardisierten Fördertechniken oder Baugruppen minimiert werden.

Durch die Standardisierung der Lagerregale können auch die vorderen und/oder hinteren Längstraversen unabhängig von der Konfiguration des Regallagersystems standardisiert und damit kostengünstig hergestellt werden.

Sind gemäß der Erfindung die Pufferfördervorrichtungen mit Tragholme oder Tragplatten und dgl. an der vorderen und/oder hinteren Längstraverse befestigt, hat man höchste Flexibilität in der Verwendung einzelner Komponente für die Lagerregale, wie Regalsteher, Querträger und dgl., und Baugruppen, wie Wartungsbühne und dgl.. Man ist nicht an einen einzigen Lieferanten gebunden, sondern kann ein Regallagersystem von mehreren Lieferanten realisiert werden.

Zudem kann die Montage der Pufferfördervorrichtungen auch durch weniger qualifiziertes Personal erfolgen und Montagefehler werden weitestgehend vermieden.

Die vorderen Längstraversen bilden einen offenen Profilquerschnitt, insbesondere einen im Wesentlichen C-förmigen Querschnitt, und umfassen jeweils den Profilsteg, einen vom Profilsteg abgewinkelten horizontalen oberen Profilflansch und einen vom Profilsteg abgewinkelten unteren Profilflansch und einen vom oberen Profilflansch abgewinkelten Führungssteg, wobei der obere Profilflansch eine Lauffläche für Laufräder des Förderfahrzeuges und der Führungssteg zumindest eine Führungsfläche für eine Führungsvorrichtung des Förderfahrzeuges aus. Dadurch wird der vorderen Längstraverse eine hohe Formstabilität gegeben, sodass auch die Befestigung der Funktionszusatzmodule keine Auswirkung auf die Lauf- und Führungsgenauigkeit des Förderfahrzeuges hat.

Eine vorteilhafte Ausgestaltung der Erfindung liegt auch darin, dass der untere Profilflansch ferner einen vertikalen Profilschenkel umfasst, auf dessen freiem Ende ein Energieversorgungssystem, insbesondere eine Schleifleitungsanordnung montierbar bzw. aufsteckbar ist. Dadurch wird erreicht, dass die Schleifleitungsanordnung besonders einfach an ihrem Bestimmungsort montiert werden kann. Zusätzliche Halteelemente wie Schrauben, Nieten, Klebstoff, Halteklammern und dgl. sind nicht zwingend erforderlich. Dabei ist von Vorteil, wenn sich die vertikalen Profilschenkeln des untere Profilflansches und oberen Profilflansches mit Parallelabstand aufeinander zu erstrecken, sodass eine besonders einfache Anbringung des Energieversorgungssystems am unteren Profilflansch und ein Schutz gegen äußere Einflüsse, wie Flüssigkeiten oder Staub und dgl. ermöglicht werden. Außerdem ist eine Platz sparende Anordnung des Energieversorgungssystems innerhalb des Profilquerschnittes möglich.

Von Vorteil ist, wenn der Profilsteg einen vertikalen unteren Profilschenkel und einen von diesem in Richtung zum oberen Profilflansch abgewinkelten oberen Profilschenkel ausbildet, wobei sich vom abgewinkelten oberen Profilflansch bis in den vertikalen unteren Profilschenkel schlitzförmige Ausnehmungen erstrecken, in welche Querträger des Lageregals einhängbar sind. Die nach oben hin freiliegenden schlitzförmigen Ausnehmungen sind sohin im stabilen und durchgehenden Profilsteg angeordnet und ermöglichen eine Montage und Verbindung der Querträger nach der Befestigung der Längstraversen an den Regalstehern durch einfaches Einstecken bzw. Einhängen ohne zusätzlichem Werkzeug.

Vorzugsweise sind die Montage- bzw. Befestigungspositionen so gestaltet, dass die Pufferfördervorrichtungen zur Komplettierung des Regallagersystems daran modular angebaut werden können. Somit ist das gesamte Regallagersystem modular aufgebaut und die Pufferfördervorrichtungen in der jeweiligen Regalebene ausschließlich an der jeweiligen vorderen Längstraverse und/oder der jeweiligen hinteren Längstraverse befestigt. Dabei können die Pufferfördervorrichtungen in nur einer oder einigen der Regalebenen oder allen Regalebenen vorgesehen werden.

Gemäß einer Ausführung der Erfindung ist es auch möglich, dass die vorderen Längstraversen der Lagerregale über eine erste Verbindungsvorrichtung an ihren einander zugewandten Stirnenden miteinander oder zumindest an einem ihrer einander gegenüberliegenden Stirnenden mit den vorderen Regalstehern verbunden sind und jeweils einen Profilsteg aufweisen, welche Verbindungsvorrichtung eine erste Verbindungsplatte und eine zweite Verbindungsplatte umfasst, welche zu beiden Seiten des Profilsteges und gegen dessen einander abgewandte Seitenflächen anliegend angeordnet sowie über Verbindungsmittel miteinander verbunden sind. Von Vorteil ist, dass die gegenüber einem Schaftquerschnitt des Verbindungsmittels, wie Schrauben, Bolzen und dgl., verhältnismäßig großen Berührungsflächen an den Verbindungsplatten und dem Profilsteg kraftübertragend aneinander anliegen und damit eine optimale Kraftübertragung an der jeweiligen Verbindungsstelle zwischen aneinander stoßender vorderer Längstraversen und/oder der vorderen Längstraverse und dem Regalsteher erreicht wird. Da anstelle der aus dem Stand der Technik bekannten einen, auf Abscherung beanspruchten Schnittstelle der Schrauben sind gemäß der Erfindung nun zumindest zwei Schnittstellen vorhanden, sodass bei gleicher Belastung die gesamte Verbindung kleinbauend ausgebildet werden kann.

Sind besonders großbauende Regallagersysteme erforderlich und soll dennoch eine einfache Montage der Längstraversen an den Lagerregalen möglich sein, so erweist es sich von Vorteil, wenn die Lagerregale sich in der Verlängerung der ersten vorderen Längstraversen erstreckende, zweite vordere Längstraversen umfassen, wobei jeweils die zweiten vorderen Längstraversen zumindest an einem der ersten vorderen Längstraversen zugewandten Stirnende über die erste Verbindungsvorrichtung mit den ersten vorderen Längstraversen verbunden sind und einen Profilsteg aufweisen, und wobei die erste Verbindungsplatte und die zweite Verbindungsplatte auch zu beiden Seiten des Profilsteges der zweiten vorderen Längstraversen und gegen dessen einander abgewandte Seitenflächen anliegend angeordnet sowie über Verbindungsmittel miteinander verbunden sind.

Es ist auch von Vorteil, wenn die zweiten vorderen Längstraversen zusätzlich mit jenem der vorderen Regalsteher verbunden sind, an welchem auch die ersten vorderen Längstraversen verbunden sind. Damit wird eine noch höher beanspruchbare Verbindung zwischen den vorderen Längstraversen geschaffen.

Die vorderen Längstraversen bilden einen offenen Profilquerschnitt, insbesondere einen im Wesentlichen C-förmigen Querschnitt, und bilden jeweils den Profilsteg, einen vom Profilsteg abgewinkelten horizontalen oberen Profilflansch und einen vom Profilsteg abgewinkelten unteren Profilflansch und einen vom oberen Profilflansch abgewinkelten Führungssteg umfassen, wobei der obere Profilflansch eine Lauffläche für Laufräder des Förderfahrzeuges und der Führungssteg zumindest eine Führungsfläche für eine Führungsvorrichtung des Förderfahrzeuges aus. Dadurch wird der Längstraverse eine hohe Formstabilität gegeben und ist zudem eine Platz sparende Anordnung der zweiten Verbindungsplatte oder auch eines Energieversorgungssystems innerhalb des Profilquerschnittes möglich.

Zum besseren Verständnis der Erfindung wird diese anhand der nachfolgenden Figuren näher erläutert.

Es zeigen jeweils in stark schematisch vereinfachter Darstellung:
- Fig. 1: eine Ausführung eines Regallagersystems in perspektivischer Ansicht;
- Fig. 2: das Regallagersystem nach Fig. 1 in Draufsicht auf eine der Regalebenen und Ladegut-Manipulationsvorrichtungen sowie ein Förderfahrzeug;
- Fig. 3: eine Ansicht auf eine der Regalebenen des Regallagersystems gemäß den Linien III-III in Fig. 2;
- Fig. 4: eine Ladegut-Manipulationsvorrichtung zur Einlagerung von Ladegütern in perspektivischer Ansicht;
- Fig. 5: eine Ladegut-Manipulationsvorrichtung zur Auslagerung von Ladegütern in perspektivischer Ansicht;
- Fig. 6: eine perspektivischer Ansicht auf eine der Regalebenen mit einer der vorderen Längstraversen in einem Umsetzbereich und erste Verbindungsvorrichtungen;
- Fig. 7: eine Querschnittsdarstellung der vorderen Längstraverse nach Fig. 6 und einen zwischen den Regalebenen vertikal verlaufenden Leitungsführungskanal;
- Fig. 8: eine Ausführungsform der Erfindung, mit einer Pufferzone zwischen den Lagerregalen und den Ladegut-Manipulationsvorrichtungen in Draufsicht auf eine der Regalebenen;
- Fig. 9: eine Ansicht auf eine der Regalebenen des Regallagersystems gemäß der Linie IX in Fig. 8;
- Fig. 10: eine mögliche Ausführung einer Förderfahrzeug-Hebevorrichtung für das Regallagersystem nach Fig. 1 oder Fig. 8 in perspektivischer Ansicht;
- Fig. 11: einen Teilabschnitt der Förderfahrzeug-Hebevorrichtung nach Fig. 10 mit einer Aufnahmevorrichtung in Draufsicht;
- Fig. 12: eine Querschnittsdarstellung einer Längstraverse der Aufnahmevorrichtung nach Fig. 11 und eine Energieversorgungssystem;
- Fig. 13: einen Längsschnitt durch das Energieversorgungssystem nach Fig. 12;
- Fig. 14: eine erste Verbindungsvorrichtung nach Fig. 6 und ihre erste Verbindungsplatte und zweite Verbindungsplatte in perspektivischer Ansicht;
- Fig. 15: eine erste Verbindungsvorrichtung nach Fig. 6 und ihre erste Verbindungsplatte und zweite Verbindungsplatte sowie eine zweite Verbindungsvorrichtung in Draufsicht;
- Fig. 16: eine vergrößerte Darstellung eines Teilabschnittes aus Fig. 3.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

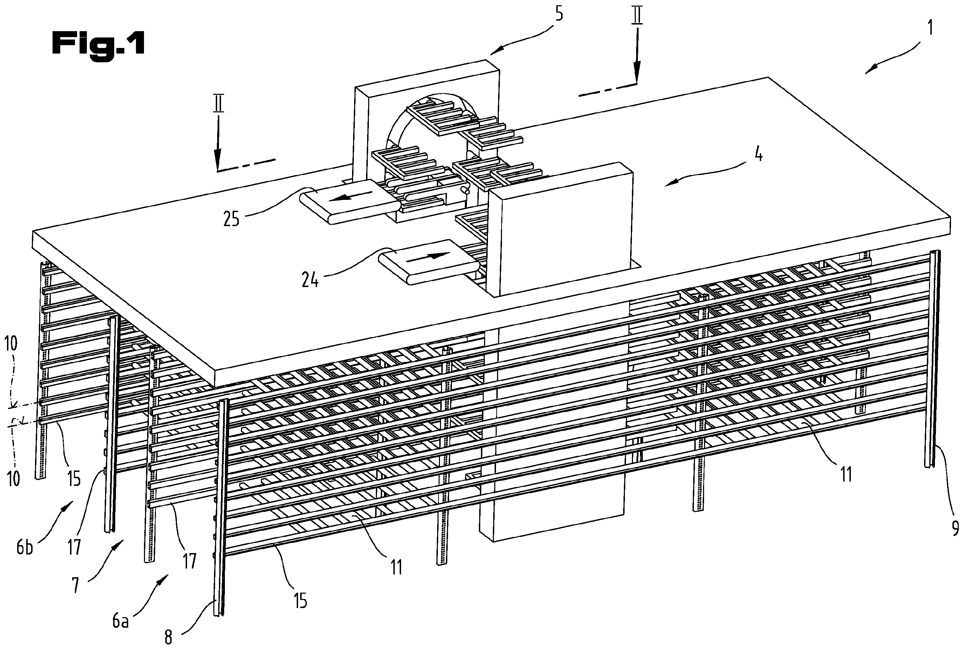

In den Fig. 1 bis 3 ist ein Regallagersystem 1 gezeigt, welches ein Regallager für Ladegüter 2, zumindest ein selbstfahrendes, autonomes Förderfahrzeug 3, eine Ladegut-Hebevorrichtung und gegebenenfalls eine Förderfahrzeug-Hebevorrichtung umfasst.

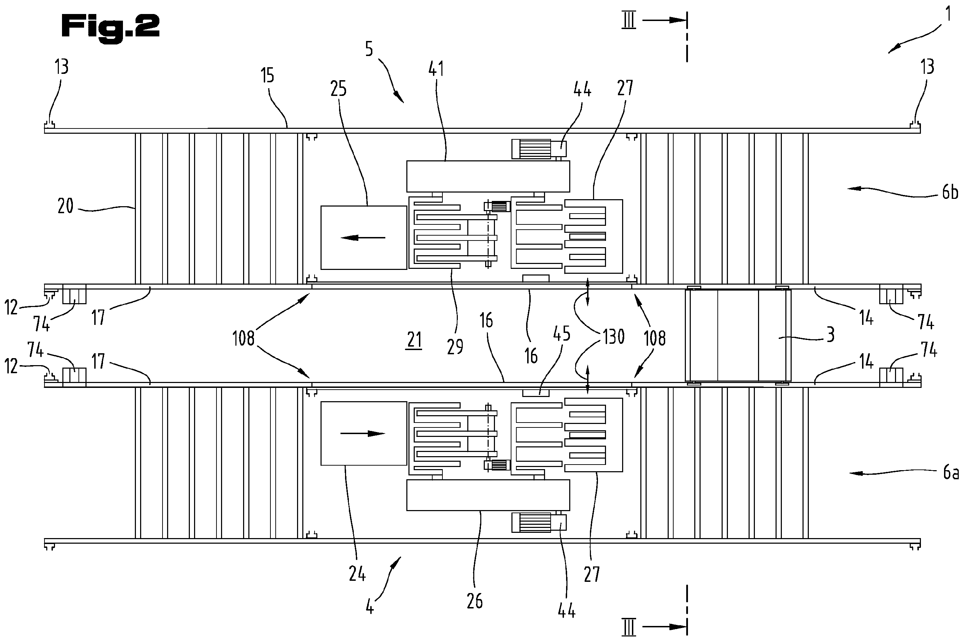

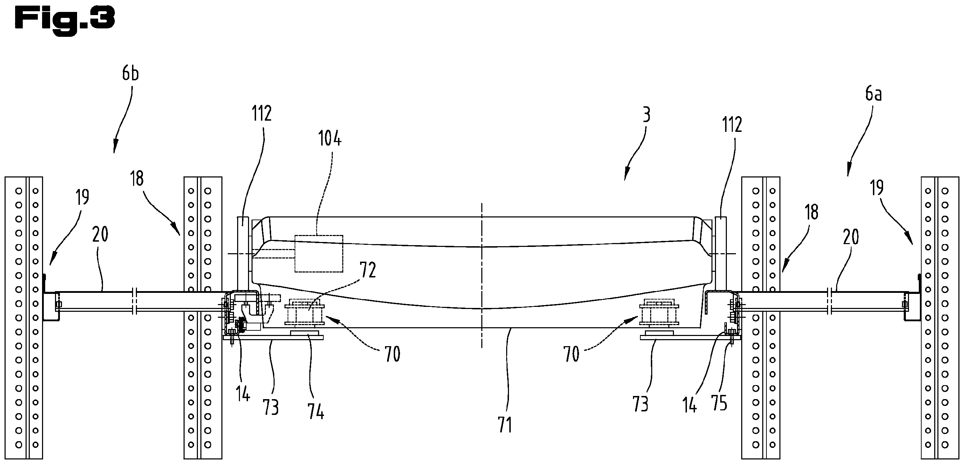

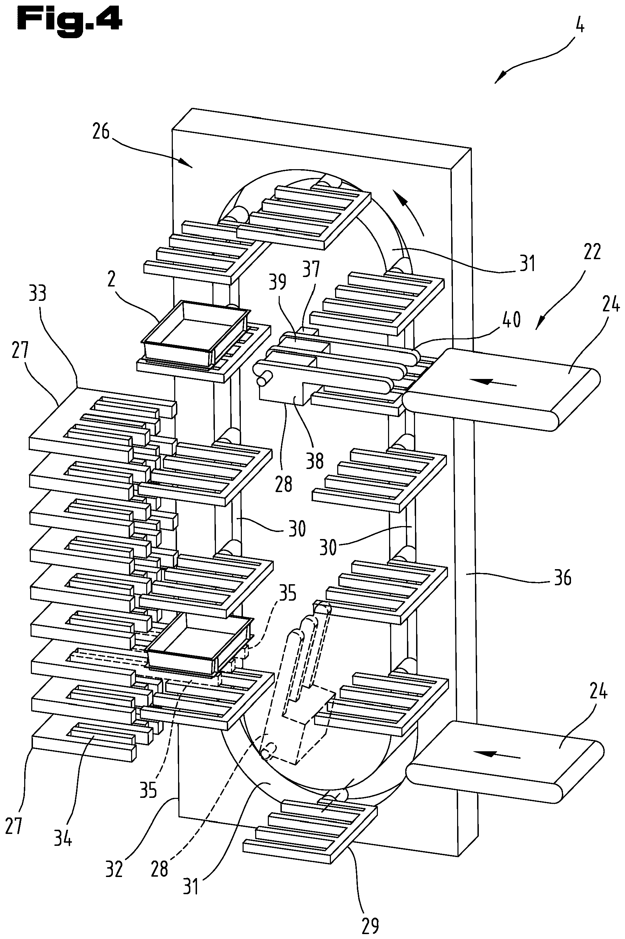

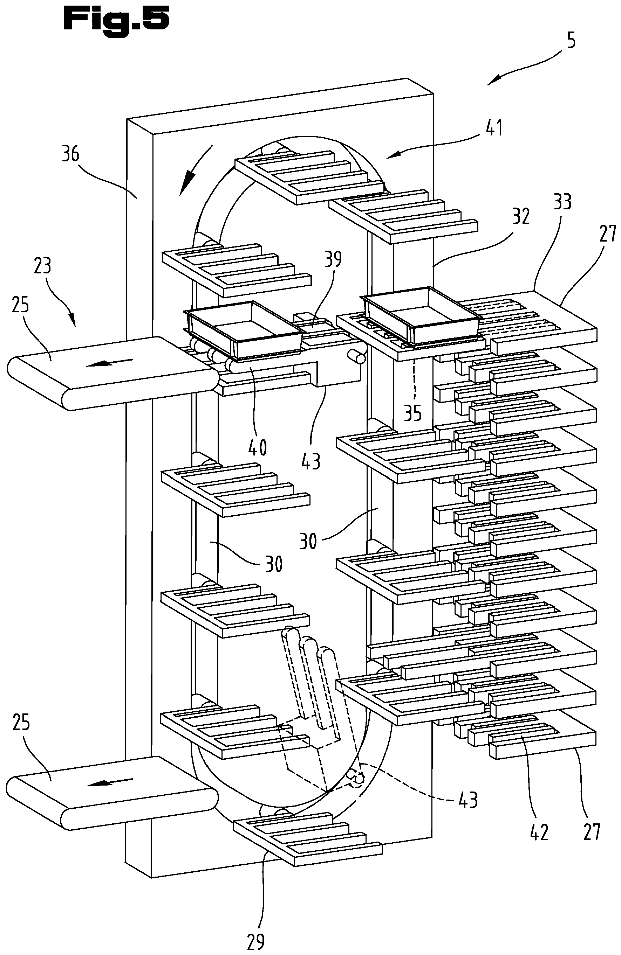

In den Fig. ist ein Regallagersystem 1 gezeigt, welches ein Regallager für Ladegüter 2 (Fig. 4, 5), zumindest ein selbstfahrendes, autonomes Förderfahrzeug 3 (Fig. 2, 3), eine erste Ladegut-Manipulationsvorrichtung 4 (Fig. 4) und eine zweite Ladegut-Manipulationsvorrichtung 5 (Fig. 5) umfasst. Das Förderfahrzeug 3 ist ein Einebenenregalbediengerät (Shuttle) und umfasst einen Grundrahmen 71, Laufräder 112, einen Fahrmotor 104 zum Antrieb mindestens eines Laufrades 112, eine Lastaufnahmevorrichtung 129 zum Einbzw. Auslagern von Ladegütern 2 in ein bzw. aus einem Lagerregal 6a, 6b sowie gegebenen falls zumindest eine Verriegelungsvorrichtung 70. Die Ladegüter 2 sind beispielsweise Behälter, Kartonagen, Tablare und dgl. Eine Bühne trennt unterschiedliche Stockwerksebenen, wobei die Ladegut-Manipulationsvorrichtungen 4, 5 aus Ausnehmungen am oberen Stockwerk herausragen.

Das Regallager weist in einem Abstand parallel angeordnete Lagerregale 6a, 6b auf, zwischen denen sich eine Regalgasse 7 ausgehend von einer ersten Regallagerseite 8 zu einer zweiten Regallagerseite 9 erstreckt und welche in übereinander liegenden Regalebenen 10 jeweils nebeneinander vorgesehene Stellplätze 11 für die Ladegüter 2 ausbilden.

Die Lagerregale 6a, 6b umfassen jeweils der Regalgasse 7 benachbarte, vertikale vordere Regalsteher 12 und von der Regalgasse 7 entfernte, vertikale hintere Regalsteher 13, wobei die vorderen Regalsteher 12 in der jeweiligen Regalebene 10 über zumindest eine horizontale vordere Längstraverse 14 und die hinteren Regalsteher 13 in der jeweiligen Regalebene 10 über zumindest eine horizontale hintere Längstraverse 17 miteinander verbunden sind. Die Längstraversen 14, 15 verlaufen in Längsrichtung der Regalgasse 7 (X-Richtung), wobei zumindest die in der jeweiligen Regalebene 10 paarweise einander gegenüberliegenden vorderen Längstraversen 14 über noch näher zu beschreibende Verbindungsvorrichtungen mit den vorderen Regalstehern 12 verbunden sind. Genauso gut ist es aber auch möglich, dass auch die in der jeweiligen Regalebene 10 angeordneten hinteren Längstraversen 15 über noch näher zu beschreibende Verbindungsvorrichtungen mit den hinteren Regalstehern 13 verbunden sind.

Es kann sich beispielweise aus fertigungstechnischen Gründen in der Herstellung der vorderen Längstraversen oder aus montagetechnischen Gründen der vorderen Längstraversen und dgl. auch von Vorteil erweisen, dass in Längsrichtung der Regalgasse 7 hintereinander mehrere vordere Längstraversen 14, 16, 17 vorgesehen sind, welche über noch näher zu beschreibende Verbindungsvorrichtungen miteinander und/oder den vorderen Regalstehern 12 verbunden werden. Genauso gut ist es aber auch möglich, dass in Längsrichtung der Regalgasse 7 hintereinander mehrere hintere Längstraversen (nicht dargestellt) vorgesehen sind, welche über noch näher zu beschreibende Verbindungsvorrichtungen miteinander und/oder den hinteren Regalstehern 13 verbunden werden.

Die parallel zueinander verlaufenden vorderen Längstraversen 14, (16, 17) und hinteren Längstraversen 15 befinden sich dabei einerseits an einer der Regalgasse 7 zugewandten Bedienseite 18 und andererseits an einem der Regalgasse 7 abgewandten Regalfachende 19 des Lagerregals 6a, 6b, wobei sie über die Stellplätze 11 bzw. Lagerfläche bildende Querträger 20 miteinander verbunden sind (Fig. 2 und 3). Die Querträger 20 erstrecken sich zwischen den Längstraversen 14, 15, (16, 17) in Tiefenrichtung eines Regalfaches (Z-Richtung).

Nach gezeigter Ausführung bilden die Lagerregale 6a, 6b in den Regalebenen 10 jeweils nebeneinander und hintereinander vorgesehene Stellplätze 11 für die Ladegüter 2 aus, sodass in Tiefenrichtung der Lagerregale 6a, 6b zwei Ladegüter 2 abgestellt werden können, daher eine so genannte "doppelttiefe" Lagerung möglich ist. Andererseits ist es auch möglich, dass die Lagerregale 6a, 6b in den Regalebenen 10 jeweils ausschließlich in einer Reihe nebeneinander vorgesehene Stellplätze 11 für die Ladegüter 2 ausbilden, sodass in Tiefenrichtung der Lagerregale 6a, 6b nur ein Ladegut 2 abgestellt werden kann, daher eine so genannte "einfachtiefe" Lagerung möglich ist.

Die Ladegut-Manipulationsvorrichtungen 4, 5 sind nach gezeigter Ausführung zwischen den stirnseitigen Regallagerseiten 8, 9 angeordnet, daher im Regallager bzw. in den Lagerregalen 6a, 6b integriert. Ein Umsetzbereich 21 ist zwischen den Ladegut-Manipulationsvorrichtungen 4, 5 ausgebildet, wobei in diesem Ladegüter 2 von einem Ladegut-Verteilsystem, insbesondere einem Einlagerungs-Verteilsystem 22 (Fig. 4) angefördert und einem Auslagerung-Verteilsystem 23 (Fig. 5) abgefördert, zwischen dem Ladegut-Verteilsystem und den Ladegut-Manipulationsvorrichtungen 4, 5 umgesetzt sowie zwischen den Ladegut-Manipulationsvorrichtungen 4, 5 und den Lagerregalen 6a, 6b gefördert werden.

In jeder Regalebene 10 erstrecken sich entlang der Regalgasse 7 zwischen den stirnseitigen Regallagerseiten 8, 9, daher auch durch den Umsetzbereich 21 hindurch die Längstraversen 14, (16, 17), entlang deren das Förderfahrzeug 3 (Shuttle) geführt bewegbar ist, um Ladegüter 2, wie beispielsweise Behälter, Kartonagen, Tablare und dgl. zu den in den Regalebenen 10 der Lagerregale 6a, 6b jeweils vorgesehenen Stellplätzen 11 anzutransportieren und von den in den Regalebenen 10 der Lagerregale 6a, 6b jeweils vorgesehenen Stellplätzen 11 abzutransportieren.

Wie in Fig. 4 und 5 ersichtlich, umfasst das Ladegut-Verteilsystem vorzugsweise ein separates Einlagerungs-Verteilsystem 22, durch welches Ladegüter 2 zum Regallager angefördert werden, und ein separates Auslagerungs-Verteilsystem 23, durch welches für einen Auftrag, insbesondere einen Kommissionierauftrag oder Kundenauftrag benötigte Ladegüter 2 vom Regallager abgefördert werden. Die erste Ladegut-Manipulationsvorrichtung 4 ist an das Einlagerungs-Verteilsystem 22 für Ladegüter 2 und die zweite Ladegut-Manipulationsvorrichtung 5 an das Auslagerungs-Verteilsystem 23 für Ladegüter 2 angeschlossen.

Das Einlagerungs-Verteilsystem 22 umfasst zwei vertikal übereinander angeordnete Einlagerungsbahnen 24 und das Auslagerungs-Verteilsystem 23 zwei vertikal übereinander angeordnete Auslagerungsbahnen 25, welche beispielsweise als Bandförderer, Rollenförderer, bevorzugt mit Staufunktion ausgebildet sind. Die Einlagerungsbahnen 24 und Auslagerungsbahnen 25 sind dabei stationär angeordnet.

Die Ladegut-Manipulationsvorrichtung 4 weist eine vertikal ausgerichtete Umlauffördervorrichtung 26, erste Umsetzvorrichtungen 27 und zweite Umsetzvorrichtungen 28 auf.

Die Umlauffördervorrichtung 26 (Einlagerungs-Umlauffördervorrichtung) ist durch einen Paternoster gebildet und umfasst in Umlaufrichtung - gemäß Pfeil - mit (festem) gegenseitigem Abstand angeordnete und durch einen (nicht gezeigten) Stellantrieb, insbesondere Zugmitteltrieb, entlang einer geschlossenen Förderumlaufbahn bewegbare rostartige Tragrahmen 29, welche jeweils auf ihrer Oberseite relativ zur Umlaufrichtung eine horizontale Auflagerebene für zumindest ein Ladegut 2 ausbilden. Die Tragrahmen 29 sind dabei jeweils über eine Gelenkverbindung an einem nicht gezeigten Zugmittel, wie beispielsweise eine Kette, ein Riemen und dgl. befestigt, sodass die Tragrahmen 29 während ihrer Umlaufbewegung entlang der Förderumlaufbahn stets in einer Horizontallage gehalten werden. Die Förderumlaufbahn ist durch parallel zueinander verlaufende geradlinige Umlaufbahnabschnitte 30 und diese geradlinigen Umlaufbahnabschnitte 30 endseitig verbindende, halbkreisförmige Umlaufbahnabschnitte 31 gebildet.

Die ersten Umsetzvorrichtungen 27 sind auf der ersten Umlaufbahnseite 32 entlang des geraden (linken) Umlaufbahnabschnittes 30 angeordnet, wie in Fig. 4 gezeigt. Die Umsetzvorrichtungen 27 umfassen in der jeweiligen Regalebene 10 (Fig. 1) angeordnete und über einen elektrisch oder fluidisch betätigbaren Stellantrieb 33 zwischen einer aus der Förderumlaufbahn herausbewegten Ausgangsstellung (wie in festen Linien eingetragen) und einer in die Förderumlaufbahn hineinbewegten Umsetzstellung (wie in strichlierte Linien eingetragen) bewegbare rostartige Aufnahmerahmen 34, auf denen jeweils zumindest ein Ladegut 2 abstellbar ist. Die ersten Umsetzvorrichtungen 27 sind dabei, wie Fig. 2 erkennen lässt, seitlich neben der Regalgasse 7 entlang der vorderen Längstraversen 14, (16, 17) für das Förderfahrzeug 3 angeordnet.

Jeder Aufnahmerahmen 34 umfasst mit gegenseitigem Abstand parallel angeordnete Aufnahmeteile 35. Die Aufnahmeteile 35 sind Teleskoparme, welche auf ihrer Oberseite relativ zur Umlaufrichtung der Tragrahmen 29 eine horizontale Auflagerebene für zumindest ein Ladegut 2 ausbilden.

Wie in Fig. 4 auch ersichtlich, sind die zweiten Umsetzvorrichtungen 28 entlang des geraden (rechten) Umlaufbahnabschnittes 30 vorgesehen und einer zweiten Umlaufbahnseite 36 zugeordnet. Die Umsetzvorrichtungen 28 sind in vertikal übereinander liegenden Horizontalebenen seitlich neben der Regalgasse 7 zwischen den Umlaufbahnabschnitten 30 angeordnet und umfassen jeweils ein über einen Stellantrieb 37 zwischen einer aus der Förderumlaufbahn herausbewegten Ausgangsstellung (wie in strichlierte Linien anhand der unteren Umsetzvorrichtung eingetragen) und einer in die Förderumlaufbahn hineinbewegten Umsetzstellung (wie in festen Linien anhand der oberen Umsetzvorrichtung eingetragen) bewegbare Fördervorrichtung 38. Die Fördervorrichtung 38, beispielsweise ein Mehrspurförderer, ist nach diesem Ausführungsbeispiel um eine horizontale Lagerachse schwenkbar am Rahmen der Umlauffördervorrichtung 26 gelagert.

Die Fördervorrichtungen 38 umfassen jeweils einen Basisteil 39 und an diesem mit gegenseitigem Abstand vorragende Aufnahmeteile 40. Die Aufnahmeteile 40 der Fördervorrichtungen 38 sind vorzugsweise am Basisteil 39 gelagerte, gegebenenfalls angetriebene Riemenförderer, welche auf ihrer Oberseite relativ zur Umlaufrichtung der Tragrahmen 29 eine Auflagerebene für zumindest ein Ladegut 2 ausbilden.

Die Ladegut-Manipulationsvorrichtung 5 weist eine vertikal ausgerichtete Umlauffördervorrichtung 41, erste Umsetzvorrichtungen 42 und zweite Umsetzvorrichtungen 43 auf. Die Umlauffördervorrichtung 41 (Auslagerungs-Umlauffördervorrichtung) ist ebenfalls durch einen Paternoster gebildet.

Die Umlauffördervorrichtung 41 und die Umsetzvorrichtungen 42, 43 entsprechen jener Ausführung, wie sie in Fig. 4 beschrieben wurde und wird, um Wiederholungen zu vermeiden, auf obige Ausführungen Bezug genommen, wobei für gleiche Teile gleiche Bezugszeichen bzw. Bauteilbezeichnungen verwendet werden.

Der Antrieb der Umlauffördervorrichtung 26, 41 bzw. die Umlaufbewegung der Tragrahmen 29 wird durch einen elektrischen Antrieb 44, wie in Fig. 2 schematisch dargestellt, erreicht, welcher mit dem Stellantrieb gekoppelt und an eine (nicht dargestellte) elektronische Steuervorrichtung angeschlossen ist.

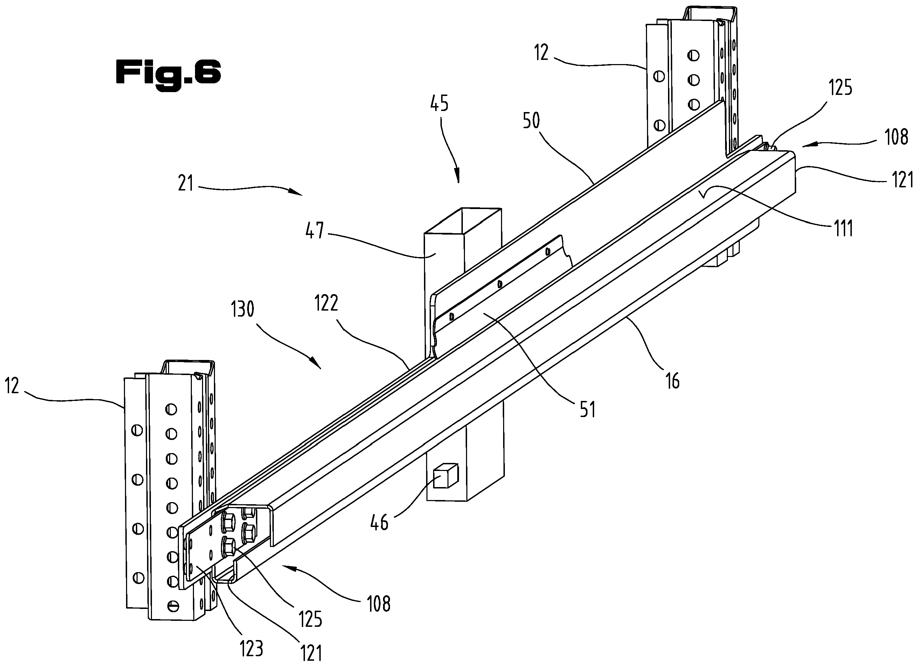

Darüber hinaus ist es von Vorteil, wie in den Fig. 2 und 6 ersichtlich, wenn die Ladegut-Manipulationsvorrichtung 4, 5 mit einer Überwachungsvorrichtung 45 versehen ist. Bevorzugt sind auf Höhe jeder Regalebene 10 im Umsetzbereich 21 zwischen der Ladegut-Manipulationsvorrichtung 4, 5 und dem Lagerregal 6a, 6b Sensoren 46, beispielsweise Lichtschranken angeordnet, mit welcher Förderabläufe der Ladegüter 2 und/oder der Belegungszustand auf einem Tragrahmen 29 und/oder eine Lageposition der Ladegüter 2 in der Ladegut-Manipulationsvorrichtung 4, 5 erfasst bzw. überwacht werden.

Die Sensoren 46 sind über nicht dargestellte Verbindungsleitungen mit einer (nicht dargestellte) elektronische Steuervorrichtung verbunden, wobei die Verbindungsleitungen von den Sensoren 46 der jeweiligen Regalebene 10 zu einem zentralen schachtartigen Leitungsführungskanal 47 verlegt und innerhalb diesem aus dem Umsetzbereich 21 geführt werden. Die Sensoren 46 sind entlang dem Leitungsführungskanal 47 vertikal übereinander angeordnet und gegebenenfalls an diesem befestigt. Der Leitungsführungskanal 47 wird im Wesentlichen senkrecht ausgerichtet und mit den Längstraversen 16 verbunden, insbesondere verschraubt.

Auch ist es möglich, dass Verbindungsleitungen für die Stellantriebe 33 (Fig. 4, 5) der Umsetzvorrichtungen 27 je Regalebene 10 zum zentralen schachtartigen Leitungsführungskanal 47 verlegt und innerhalb diesem aus dem Umsetzbereich 21 geführt werden. Umfassen die Umsetzvorrichtungen 27 auch (nicht dargestellte) Sensoren, beispielsweise Lichtschranken, so werden auch dessen Verbindungsleitungen zum zentralen schachtartigen Leitungsführungskanal 47 verlegt und innerhalb diesem aus dem Umsetzbereich 21 geführt werden.

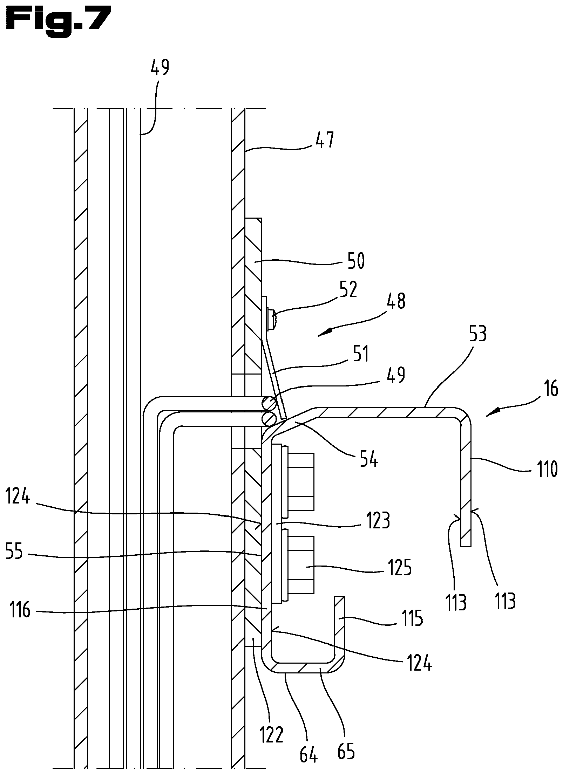

Hierzu wird, wie in den Fig. 6 und 7 ersichtlich, entlang der Längstraverse 16 ein Kabelkanal 48 vorgesehen, innerhalb welchen in Längsrichtung der Längstraverse 16 verlaufend die Verbindungsleitungen 49 verlegt werden können.

Der Kabelkanal 48 umfasst einen in Längsrichtung der Längstraverse 16 verlaufenden vertikalen ersten Wandteil 50 und einen an diesem vorspringenden, in Längsrichtung der Längstraverse 16 verlaufenden zweiten Wandteil 51. Der zweite Wandteil 51 ist nach gezeigter Ausführung ein Blechbiegeteil und wird über Schrauben 52 mit dem ersten Wandteil 50 verbunden. Der zweite Wandteil 51 ragt aber nur soweit am ersten Wandteil 50 vor, dass das Förderfahrzeug 3 entlang der Längstraverse 16 seitlich zum ersten Wandteil 50 ungehindert bewegt werden kann. Bevorzugt ist der erste Wandteil 50 mit seiner der Längstraverse 16 zugewandten Längskante auf einen zwischen einem oberen Profilflansch 53 und einem von diesem abgewinkelten oberen Profilschenkel 54 eines Profilsteges 55 ausgerichtet. Die Wandteile 50, 51 und die Längstraverse 16 begrenzen somit den Aufnahmekanal für die Verbindungsleitungen.

In Fig. 7 sind innerhalb des Leitungsführungskanal 47 die Verbindungsleitungen 49 aus einer (unteren) ersten Regalebene 10 und die Verbindungsleitungen 49 aus einer (oberen) zweiten Regalebene 10 eingetragen, wobei die Verbindungsleitungen 49 der jeweiligen Regalebene 10 durch eine in der Gehäusewand des Leitungsführungskanal 47 angeordnete Ausnehmungen hindurch geführt und innerhalb des Leitungsführungskanals 47 verlegt werden. Auch können die Verbindungsleitungen 49 beispielsweise des in Fig. 6 gezeigten Sensors 46 über eine nicht dargestellte Ausnehmung direkt und daher nicht über den Kabelkanal 48 hindurch geführt und innerhalb des Leitungsführungskanals 47 verlegt werden. Gleiches ist für Stellantriebe denkbar.

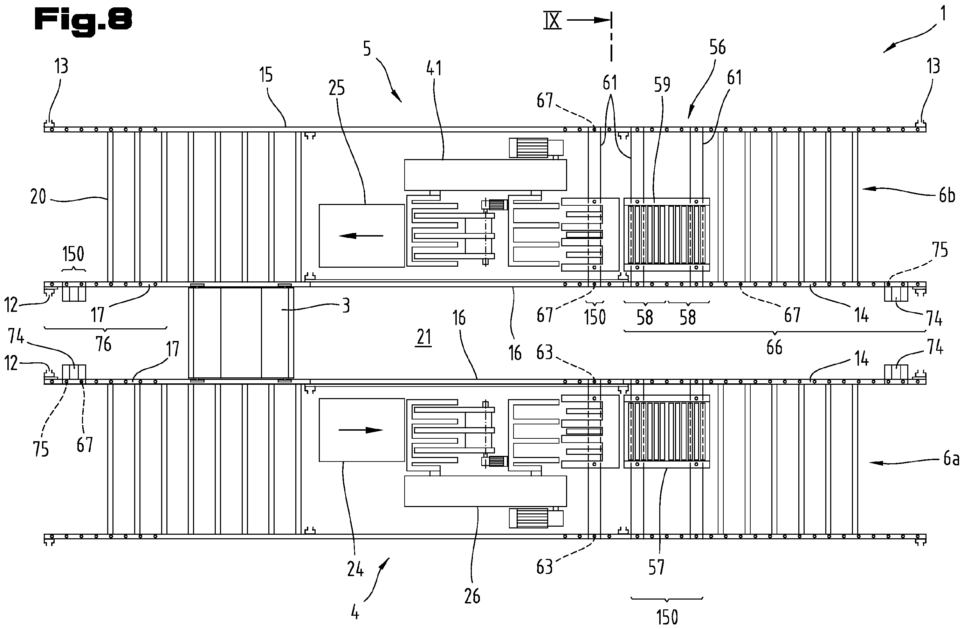

Wie in Fig. 8 schematisch dargestellt, umfasst ein erfindungsgemäßes Regallagersystem 1 eine Pufferzone 56 zwischen der Ladegut-Manipulationsvorrichtung 4, 5 und dem Lagerregal 6a, 6b. Diese weist in der jeweiligen Regalebene 10 und im jeweiligen Lagerregal 6a, 6b integriert eine automatisierte Pufferfördervorrichtung 57 auf, welche als Staurollenbahn, Staugurtförderer und dgl. gestaltet sein kann, und dessen Förderrichtung parallel zur Regalgasse 7 verläuft. Die Pufferfördervorrichtung 57 bildet in Förderrichtung zumindest einen Pufferplatz 58 für ein Ladegut 2 oder, wie gezeigt, in Förderrichtung hintereinander mehrere Pufferplätze 58 für Ladegüter 2. Die Pufferfördervorrichtung 57 kann elektrisch oder fluidisch betätigbare Stellantriebe und/oder Sensoren umfassen, wobei deren Verbindungsleitungen wiederum über den zentralen schachtartigen Leitungsführungskanal 47 geführt werden können.

Die im Umsetzbereich 21 zur Versorgung der elektrisch oder fluidisch betätigbaren Stellantriebe und/oder Sensoren erforderlichen Verbindungsleitungen werden somit in der jeweiligen Regalebene 10, in welcher Stellantriebe und/oder Sensoren vorgesehen sind, zum zentralen schachtartigen Leitungsführungskanal 47 entlang der Längstraverse 16 und gegebenenfalls in einem Kabelkanal 48 verlegt und im Leitung sführungskanal 47 von der jeweiligen Regalebene 10 auf ein Höhenniveau geführt, auf welchem die Verbindungsleitungen aus dem Umsetzbereich 21 herausgeführt und mit der elektrischen oder fluidischen Steuerungsvorrichtung ungehindert verbunden werden können.

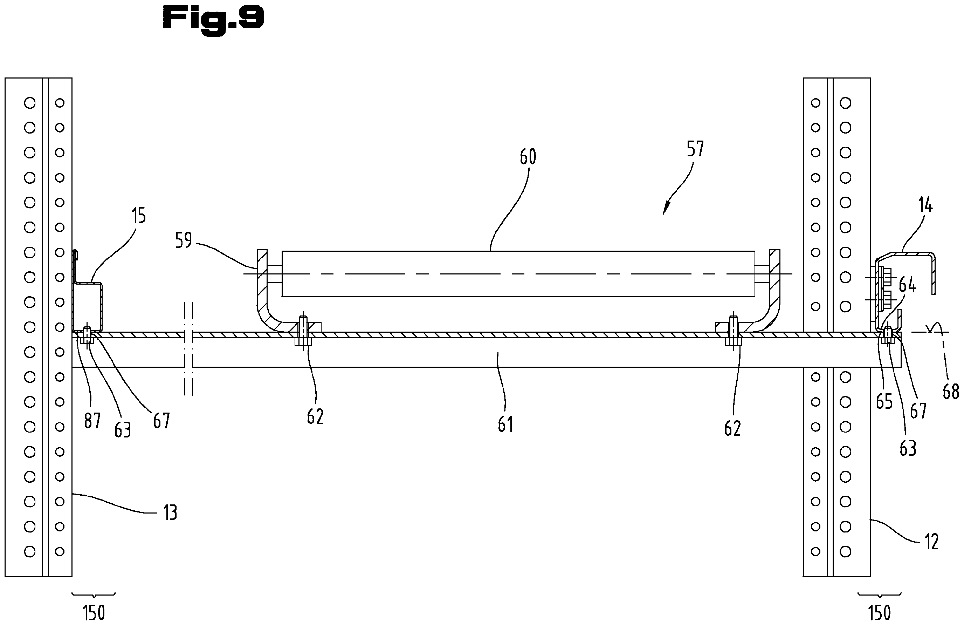

Wie in den Fig. 8 und 9 ersichtlich, sind die in der jeweiligen Regalebene 10 vorgesehenen Pufferfördervorrichtungen 57 an der in der jeweiligen Regalebene 10 verlaufenden vorderen Längstraversen 14 und/oder hinteren Längstraversen 15 gelagert. Die Pufferfördervorrichtung 57 umfasst einen Tragrahmen 59 und je Pufferplatz 58 zumindest ein am Tragrahmen 59 gelagertes, antreibbares Förderorgan 60, beispielweise ein Förderband, oder eine Vielzahl von antreibbaren Förderorganen, beispielweise Förderrollen. Die Pufferfördervorrichtung 57 ist mit dem Tragrahmen 59 auf Tragholme 61 gelagert und über Verbindungsmittel 62, beispielweise Befestigungsschrauben, an den Tragholmen 61 bevorzugt lösbar befestigt. Die Tragholme 61 haben beispielweise einen U-förmigen Querschnitt.

Die Tragholme 61 sind mit ihren einander gegenüberliegenden Enden über Verbindungsmittel 63, beispielweise Befestigungsschrauben, an den vorderen Längstraversen 14 und/oder hinteren Längstraversen 15 bevorzugt lösbar befestigt.

Die vordere Längstraverse 14 der jeweiligen Regalebene 10 umfasst einen unteren Profilflansch 64 mit einem horizontalen Profilschenkel 65 und zumindest einen Montageabschnitt 66 am Profilschenkel 65, in welchem Montageschnittstellen 67, insbesondere in einem Rasterabstand angeordnete Montagebohrungen oder Aussparungen vorbereitet sind und eine horizontale Montageebene 68 ausgebildet ist. Der Montageabschnitt 66 erstreckt sich über eine Teillänge und in Längsrichtung der vorderen Längstraverse 14. Die Montageschnittstellen 67 sind bevorzugt in regelmäßigen Abständen zueinander angeordnet, beispielweise im Abstand von weniger als 200 mm. Dieser Abstand ist jedenfalls kleiner als ein Längsabstand zwischen den in Längsrichtung der Regalgasse 7 benachbart hintereinander angeordneten vorderen Regalsteher 12.

Auch die hintere Längstraverse 15 der jeweiligen Regalebene 10 kann an ihrem unteren horizontalen Profilschenkel 87 zumindest einen Montageabschnitt 66 umfassen, in welchem Montageschnittstellen 67, insbesondere in einem Rasterabstand angeordnete Montagebohrungen oder Aussparungen vorbereitet sind und eine horizontale Montageebene 68 ausgebildet ist. Der Montageabschnitt 66 erstreckt sich über eine Teillänge und in Längsrichtung der hinteren Längstraverse 15. Die Montageschnittstellen 67 sind bevorzugt in regelmäßigen Abständen zueinander angeordnet, beispielweise im Abstand von weniger als 200 mm. Dieser Abstand ist jedenfalls kleiner als ein Längsabstand zwischen den in Längsrichtung der Regalgasse 7 benachbart hintereinander angeordneten hinteren Regalsteher 13.

Wie Fig. 3 schematisch dargestellt, kann das Förderfahrzeug 3 (Einebenenregalbediengerät) zum Ein- bzw. Auslagern von Ladegütern 2 in ein bzw. aus einem Lagerregal 6a, 6b mit Verriegelungsvorrichtungen 70 ausgestattet werden, welche jeweils ein durch einen elektrischen oder fluidischen Stellantrieb relativ zum Grundrahmen 71 heb- und senkbares Verriegelungselement 72 umfasst. Das Förderfahrzeug 3 kann auch nur eine Verriegelungsvorrichtungen 70 aufweisen. Die Verriegelungsvorrichtungen 70 wirken mit über Tragplatten 73 ortsfest an den vorderen Längstraverse 14 gelagerten Verriegelungselementen 74 zusammen, wie in Fig. 2, 3, 8 und 10 gezeigt.

Das Regallagersystem 1 umfasst in jeder Regalebene 10 entlang der Regalgasse 7 im Bereich der ersten Regallagerseite 8 und/oder im Bereich der zweiten Regallagerseite 9 jeweils die Tragplatten 73. Die Tragplatten 73 sind über Verbindungsmittel 75 (Fig. 3, 8), insbesondere Schrauben mit den vorderen Längstraversen 14, (17) bevorzugt lösbar verbunden. Ist nur eine einzige Verriegelungsvorrichtung 70 am Förderfahrzeug 3 vorgesehen, so sind die Tragplatten 73 entweder an den linken vorderen Längstraversen 14, (17) oder rechten vorderen Längstraversen 14, (17) befestigt. Ist die Verriegelungsvorrichtung 70 am Förderfahrzeug 3 an der Frontseite und/oder Heckseite angeordnet, so können sich die Tragplatten 73 in jeder Regalebene 10 im Bereich der ersten Regallagerseite 8 und/oder im Bereich der zweiten Regallagerseite 9 zwischen den vorderen Längstraversen 14, (17) durchgehend erstrecken und sind sodann die Tragplatten 73 über Verbindungsmittel 75, insbesondere Schrauben mit beiden vorderen Längstraversen 14, 17 je Regalebene 10 verbunden.

Die Tragplatten 73 je Regalebene 10 liegen im Wesentlichen innerhalb einer Montageebene 68 und sind an ihnen jeweils ein vorzugsweise ortsfestes Verriegelungselement 74 zum bedarfsweisen Blockieren der Fahrbewegung des Förderfahrzeuges 3 angeordnet.

Das Verriegelungselement 74 ist derart angeordnet und ausgebildet, dass auf der Fahrbewegung des Förderfahrzeuges 3 in Längsrichtung der Regalgasse 7 das Verriegelungselement 72 der Verriegelungsvorrichtung(en) 70 in einer Verriegelungsstellung am Verriegelungselement 74 aufläuft. Das Verriegelungselement 74 bildet eine Anschlagnocke, die verhindert, dass das Förderfahrzeug 3 auf der Fahrbewegung entlang der vorderen Längstraversen 14, (16, 17) der jeweiligen Regalebene 10 nicht bis über das Regalgassenende hinweg verfahren wird. Der Fahrweg ist quasi durch die im Bereich der ersten Regallagerseite 8 und/oder im Bereich der zweiten Regallagerseite 8 vorgesehenen Verriegelungselemente 74 begrenzbar.

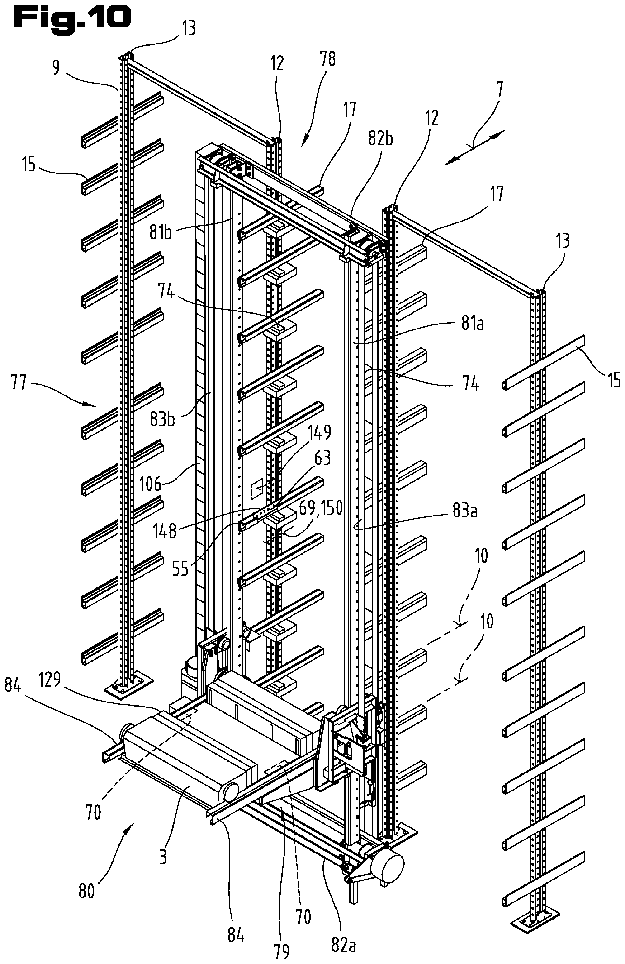

Soll das Verriegelungselement 74 überfahren bzw. das Förderfahrzeug 3 bis über die Regalgassenende hinweg verfahren werden, so wird das Verriegelungselement 72 der Verriegelungsvorrichtung(en) 70 durch Betätigen des Stellantriebes derart in die Ausgangsstellung bewegt, dass die Verriegelungselemente 72, 74 nicht miteinander in Eingriff gelangen. Dies ist erforderlich, wenn das Förderfahrzeug 3 auf eine Aufnahmevorrichtung einer Förderfahrzeug-Hebevorrichtung (Fig. 10) bewegt werden soll.

Die Tragplatten 73 für die (in Fig. 8 rechten) ortsfesten Verriegelungselemente 74 sind in dem beschriebenen (rechten) Montageabschnitt 66 entlang der vorderen Längstraversen 14 angeordnet und an den vorbereiteten Montageschnittstellen 67 über die Verbindungsmittel 75, beispielweise Befestigungsschrauben, an den vorderen Längstraversen 14 bevorzugt lösbar befestigt.

Die vordere Längstraverse 17 der jeweiligen Regalebene 10 umfasst einen unteren Profilflansch 64 mit einem horizontalen Profilschenkel 65 und vorzugsweise auch einen (linken) Montageabschnitt 76, in welchem Montageschnittstellen 67, insbesondere in einem Rasterabstand angeordnete Montagebohrungen vorbereitet sind und eine horizontale Montageebene 68 ausgebildet ist. Der Montageabschnitt 76 erstreckt sich über eine Teillänge und in Längsrichtung der vorderen Längstraverse 17.

Die Tragplatten 73 für die (in Fig. 8 linken) ortsfesten Verriegelungselemente 74 sind in dem beschriebenen (linken) Montageabschnitt 76 entlang der vorderen Längstraversen 17 angeordnet und an den vorbereiteten Montageschnittstellen 67 über die Verbindungsmittel 75, beispielweise Befestigungsschrauben, an den vorderen Längstraversen 17 bevorzugt lösbar befestigt.

Eine beispielhafte Ausführung für eine Verriegelungsvorrichtung 70 am Förderfahrzeug 3 und der konstruktive Aufbau des Förderfahrzeuges 3 sind in der österreichischen Patentanmeldung AT 511 138 offenbart.

Auch wenn nach gezeigten Fig. die Ladegut-Manipulationsvorrichtungen 4, 5 in den Lageregalen 6a, 6b integriert zwischen den stirnseitigen Regallagerseiten 8, 9 angeordnet sind, ist es auch möglich, dass die Ladegut-Manipulationsvorrichtungen 4, 5 stirnseitig an einer oder beiden Regallagerseiten 8, 9 seitlich zur Regalgasse 7 angeordnet werden. Der Umsetzbereich 21 ist in dieser Ausführung vor den Lagerregalen 6a, 6b zwischen den Ladegut-Manipulationsvorrichtungen 4, 5 ausgebildet.

Natürlich wäre es auch denkbar, dass in der jeweiligen Ausführung nur eine einzige Ladegut-Manipulationsvorrichtung 4, 5 verwendet wird. Sodann wird ein und dieselbe Umlauffördervorrichtung 26 sowohl für einen Einlagerungs- und Auslagerungsvorgang verwendet, wozu der Antrieb 44 reversierbar ausgebildet ist und damit die Umlaufrichtung nach Bedarf geändert werden kann.

Das Einlagerungs- und Auslagerungsverfahren von Ladegütern 2 und der detaillierte Aufbau der Umlauffördervorrichtung sowie unterschiedliche Ausführungen der Ladegut-Manipulationsvorrichtung sind in der österreichischen Patentanmeldung AT 511 490 offenbart.

Gemäß der in den Fig. 1 bis 9 gezeigten Ausführung, ist in jeder Regalebene 10 ein Förderfahrzeug 3 vorgesehen.

Aus wirtschaftlichen Überlegungen, kann es sich aber auch als günstig erweisen, wenn ein Förderfahrzeug 3 auf mehreren Regalebenen 10 verwendet wird. Beispielsweise wird für je drei Regalebenen 10 ein Förderfahrzeug 3 eingesetzt.

Ist die Anzahl der Förderfahrzeuge 3 geringer als die Anzahl der Regalebenen 10, so wird eine Förderfahrzeug-Hebevorrichtung 77 eingesetzt, welche ein Förderfahrzeug 3 auf unterschiedliche Regalebenen 10 aufgeben und von unterschiedlichen Regalebenen 10 aufnehmen kann.

Die Förderfahrzeug-Hebevorrichtung 77 (Umsetzvorrichtung) ist auf einer der Regallagerseiten 8, 9 stirnseitig vor dem Regallager angeordnet. Die Förderfahrzeug-Hebevorrichtung 77 umfasst einen Führungsrahmen 78, einen Hubrahmen 79 und eine heb- und senkbare Aufnahmevorrichtung 80 für das Förderfahrzeug 3.

Der Führungsrahmen 78 weist zu beiden Seiten der Regalgasse 7 angeordnete, vertikale Rahmenteile 81a, 81b, eine diese miteinander verbindende und unterhalb der untersten Regalebene 10 verlaufende untere Traverse 82a sowie eine diese miteinander verbindende und oberhalb der obersten Regalebene 10 verlaufende obere Traverse 82b.

Wie in den Fig. ersichtlich, bilden die Rahmenteile 81a, 81b jeweils einen Hubführungsabschnitt für den Hubrahmen 79 aus. Der Führungsrahmen 78, insbesondere die Rahmenteile 81a, 81b bilden jeweils einen Anbindungsabschnitt für die Befestigung der vorderen Längstraversen 17 der Lagerregale 6a, 6b aus.

Wie in Fig. 10 ersichtlich, bilden die vorderen Längstraversen 17 hierzu jeweils an ihrem Profilsteg 55 zumindest einen Montageabschnitt 69 aus, in welchem Montageschnittstellen 148, insbesondere in einem Rasterabstand angeordnete Montagebohrungen oder Aussparungen vorbereitet sind und eine vertikale Montageebene 149 ausgebildet ist. Der Montageabschnitt 67 erstreckt sich über eine Teillänge und in Längsrichtung der vorderen Längstraverse 17. Die Montageschnittstellen 148 sind bevorzugt in regelmäßigen Abständen zueinander angeordnet, beispielweise im Abstand von weniger als 100 mm.

Die Art und Weise der Befestigung der vorderen Längstraversen 17 der Lagerregale 6a, 6b am Führungsrahmen 78 ist in der österreichischen Patentanmeldung AT 511 162 offenbart.

Der Hubrahmen 79 ist mit einer Verstellvorrichtung gekoppelt, welche nach gezeigtem Ausführungsbeispiel am Führungsrahmen 78 gelagerte Zugmitteltriebe und zumindest einen Hubantrieb umfasst. Die Zugmitteltriebe umfassen synchron angetriebene, endlos umlaufende Zugmittel 83a, 83b, welche jeweils um ein (oberes) Umlenkrad und ein mit dem Hubantrieb gekuppeltes (unteres) Antriebsrad geführt sind. Durch Drehbewegung der Antriebsräder wird der Hubrahmen 79 und die auf diesem angeordnete Aufnahmevorrichtung 80 relativ zu den Regalebenen 10 in vertikaler Richtung (y-Richtung) bis zu einer von einem Rechnersystem festgelegten y-Position bewegt.

Die Aufnahmevorrichtung 80 umfasst parallel zur Regalgasse 7 (x-Richtung) mit gegenseitigem Abstand horizontal erstreckende Längstraversen 84, die auf dem über den Hubantrieb vertikal verstellbaren Hubrahmen 79 befestigt sind.

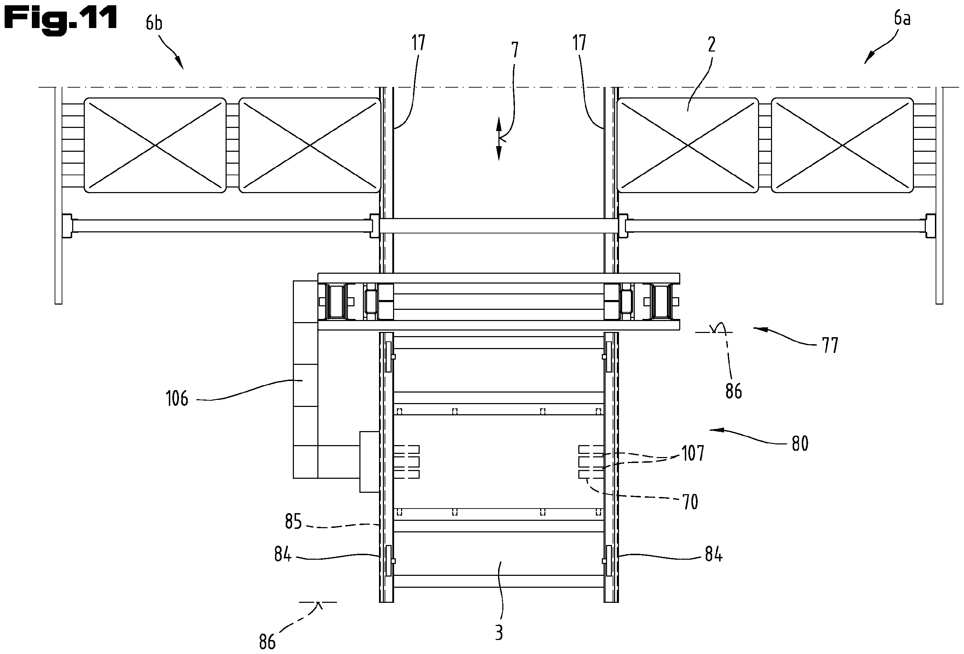

Wie aus den Fig. 10 bis 13 ersichtlich, ist zumindest eine der Längstraversen 84 der Aufnahmevorrichtung 80 mit einem elektrischen ersten Energieversorgungssystem 85 ausgestattet. Das erste Energieversorgungssystem 85 erstreckt sich zwischen einander gegenüberliegenden Stirnenden 86 im Wesentlichen über die gesamte Länge der Längstraverse 84, wie in Fig. 11 ersichtlich. Das mobile Förderfahrzeug 3 wird während der Fahrbewegung auf der Aufnahmevorrichtung 80 mit dem Energieversorgungssystem 85 mit elektrischer Energie versorgt. Im Nachfolgenden wird auf das Energieversorgungssystem 85 Bezug genommen, wenngleich es auch möglich, dass ein Energie- und Datenversorgungssystem vorgesehen wird. Dies ist beispielsweise zweckdienlich, wenn das mobile Förderfahrzeug 3 über das Energie- und Datenversorgungssystem mit elektrischer Energie versorgt und/oder über das Datenversorgungssystem elektrische Steuersignale (elektronische Daten) zwischen dem mobilen Förderfahrzeug 3 und einer Steuerungsvorrichtung (nicht dargestellt) ausgetauscht werden sollen.

Das erste Energieversorgungssystem 85 umfasst einen Grundträger 88 und an sich bekannte (bandartige) Schleifleitungen 89. Der Grundträger 88 bildet einen Isolationskörper 90, beispielweise aus Kunststoff, aus, in welchem die Schleifleitungen 89 so eingebettet sind, dass diese vom Material des Isolationskörpers 90 bis auf die für eine Stromabnahme vorgesehene Kontaktfläche umschlossen sind. Bevorzugt sind die Schleifleitungen 89 als elektrische Leiterbahnen, insbesondere als Kupferbahnen gestaltet, welche parallel nebeneinander liegend in Längsrichtung der Längstraverse 84 verlaufen. Die Schleifleitungen 89 bilden somit eine Schleifleitungsanordnung.

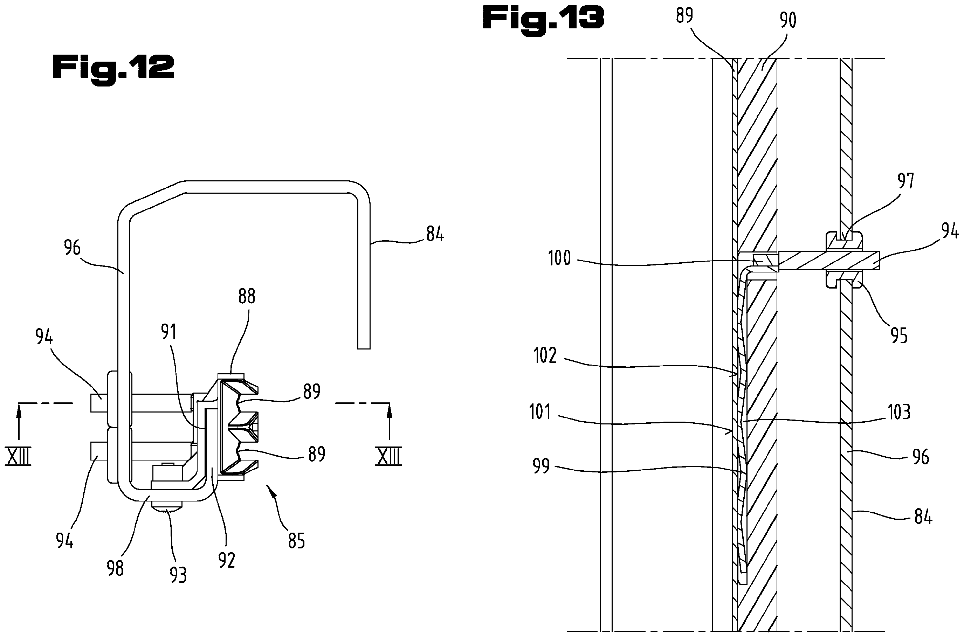

Das erste Energieversorgungssystem 85 ist über den Grundträger 88 an der Längstraverse 84 befestigt, wie in Fig. 12 näher dargestellt. Wie gezeigt, umfasst der Grundträger 88 eine in Längsrichtung der Längstraverse 84 verlaufende (daher parallel zur Fahrrichtung des Förderfahrzeuges 3) Aufnahmenut 91, über welche das erste Energieversorgungssystem 85 bzw. Energie- und/oder Datenversorgungssystem auf einem vertikalen Profilschenkel 92 der Längstraverse 84 montierbar, insbesondere aufsteckbar ist. Zusätzlich kann der Grundträger 88 über Befestigungsmittel 93, wie Schrauben und dgl., mit der Längstraverse 84 verbunden werden.

Das erste Energieversorgungssystem 85 umfasst ferner elektrische Versorgungsleitungen 94, welche mit den Schleifleitungen 89 elektrisch verbunden sind und jeweils über Halteaufnahmen 95 durch die Längstraverse 84 hindurch im Wesentlich in einer zur Längserstreckung senkrechten Querschnittsebene verlaufen. Demnach erfolgt die Energiezuführung nicht über die Stirnenden 86 der Längstraverse 84, sondern zwischen den Stirnenden 86. Die Halteaufnahmen 95 sind hierzu in Durchgangsöffnungen 97 verankert.

Dies kann derart erfolgen, dass die Längstraverse 84 in ihrem Profilsteg 96 zwischen den Stirnenden 86 je Versorgungsleitung 94 mit der Durchgangsöffnung 97 versehen ist. Andererseits kann die Längstraverse 84 auch in einem horizontalen Profilschenkel 98 zwischen den Stirnenden 86 je Versorgungsleitung 94 mit der Durchgangsöffnung 97 versehen ist, wie dies jedoch nicht dargestellt ist.

Wie in Fig. 13 näher dargestellt, ist es auch von Vorteil, wenn die elektrische Versorgungsleitung 94 über einen Kontaktbügel 99 die bandartige Schleifleitung 89 elektrisch kontaktiert. Der Kontaktbügel 99 ist als elektrischer Leiter gestaltet. Der Kontaktbügel 99 kontaktiert mit seinem ersten Endbereich einen elektrischen Leiter 100 der Versorgungsleitung 94 und mit seinem zweiten Endbereich eine der Kontaktfläche 101 gegenüberliegende Rückenfläche 102 der bandartigen Schleifleitung 89. Dabei ist der Kontaktbügel 99 in einer Ausnehmung 103 angeordnet, welche sich im Isolationskörper 90 in Längsrichtung der Schleifleitung 89 vertieft erstreckt. Ist der Kontaktbügel 99 in Richtung seines zweiten Endbereiches gewellt ausgebildet, wie gezeigt, wird der Kontaktbügel 99 zwischen dem Ausnehmungsgrund und der Rückenfläche 102 federnd gehalten.

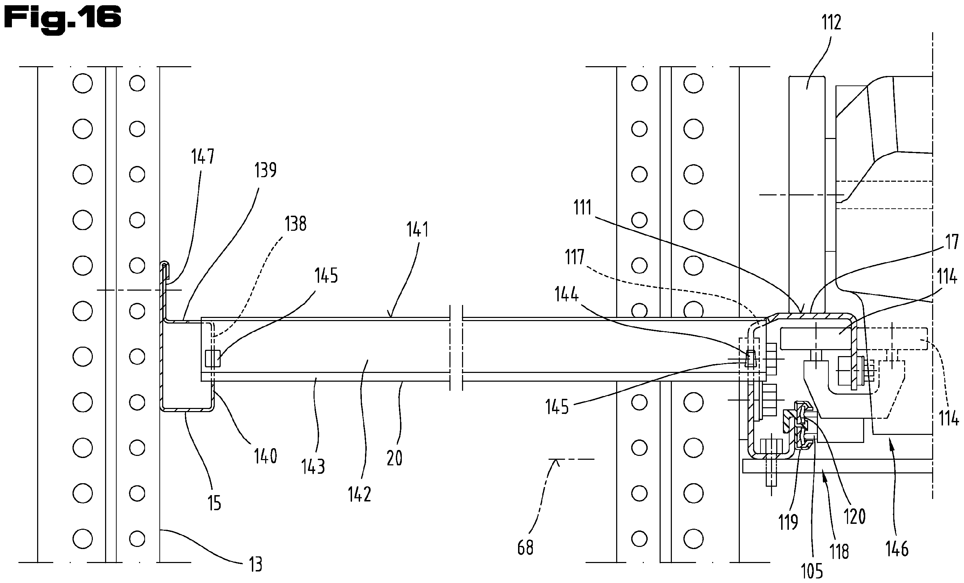

Dabei wird die elektrische Energie für einen Fahrmotor 104 des Förderfahrzeuges 3 (Fig. 3) und/oder Steuersignale für das Förderfahrzeug 3 mittels an der Längstraverse 84 angeordneter Schleifleitungen 89 zugeführt und die zugeführte Engerie ist über am Förderfahrzeug 3 (Fig. 3, 16) angeordnete Stromabnehmer 105, insbesondere Schleifkontakte, beispielsweise federbetätigte Schleifkohlen, aus den Schleifleitungen 89 abnehmbar. Die Schleifleitungen 89 bestehen aus parallel nebeneinanderliegenden Schleifleitungen für Motorströme und/oder Schleifleitungen für Steuerströme und Datenübertragungs-Signale.

Das erste Energieversorgungssystem 85 ist mit einem elektrischen zweiten Energieversorgungssystem 106 verbunden, letzteres wiederum an die (nicht dargestellte) elektronische Steuervorrichtung angeschlossen ist. Im Nachfolgen wird auf das Energieversorgungssystem 106 Bezug genommen, wenngleich es auch möglich ist, dass ein Energie- und Datenversorgungssystem vorgesehen wird.

Das zweite Energieversorgungssystem 106 umfasst (nicht dargestellte) elektrische Versorgungsleitungen, welche mit den Versorgungsleitungen 94 des ersten Energieversorgungssystems 85 elektrisch verbunden sind. Wie in den Fig. 10 und 11 schematisch dargestellt, werden die Versorgungsleitungen des zweiten Energieversorgungssystems 106 in einer Energiekette geführt, wobei ihr erstes Ende mit dem Führungsrahmen 78 und ihr zweites Ende mit der heb- und senkbaren Aufnahmevorrichtung 80 verbunden sind.

Wie in Fig. 11 schematisch angedeutet, kann die Verriegelungsvorrichtung 70 ebenso mit über Tragplatten ortsfest an den Längstraversen 84 befestigte Verriegelungselemente 107 zusammenwirken. Befindet sich das Förderfahrzeug 3 auf der Aufnahmevorrichtung 80 in einer Aufnahmeposition, so kann während der Hubbewegung der Aufnahmevorrichtung 80 das Förderfahrzeug 3 über die miteinander in Eingriff bringbaren Verriegelungselemente 72, 107 in seiner Aufnahmeposition relativ zu den Längstraversen 84 arretiert werden.

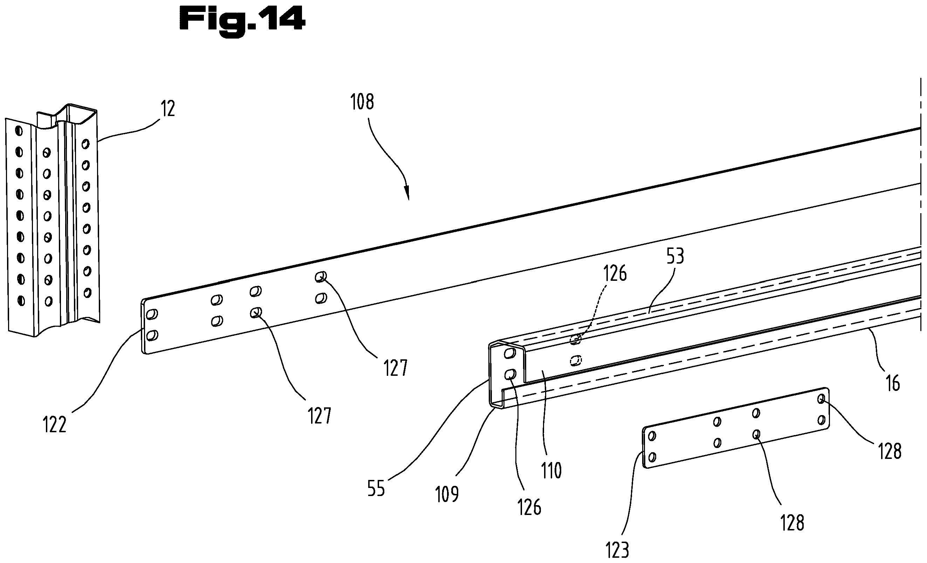

Die Fig. 6 und 14 zeigen einen Teilabschnitt aus dem Umsetzbereich 21, in welchem zumindest eine in Fig. 2 und 6 dargestellte Ladegut-Manipulationsvorrichtung 4, 5 vorgesehen ist, und eine der vordere Längstraversen 16 sowie eine erste Verbindungsvorrichtung 108.

Im Nachfolgenden wird auf die erste Verbindungsvorrichtung 108 in Zusammenhang mit den vorderen Längstraversen 16 beschrieben. Diese Verbindungsvorrichtung 108 kann auch an den vorderen Längstraversen 14, 17 verwendet werden, da die Längstraversen 14, 17 denselben Profilquerschnitt aufweisen und sich gegebenenfalls bloß in der Länge unterscheiden.

Die vordere Längstraverse 16 bzw. 14, 17 umfasst einen dem vorderen Regalsteher 12 zugewandten Profilsteg 55, einen von diesem abgewinkelten horizontalen oberen Profilflansch 53, einen vom Profilsteg 55 abgewinkelten unteren Profilflansch 109 und einen vom oberen Profilflansch 53 abgewinkelten Führungssteg 110.

Der obere Profilflansch 53, siehe Fig. 6 und 7, bildet eine horizontale Lauffläche 111 für Laufräder 112 des Förderfahrzeuges (Fig. 3) und der Führungssteg 110 zumindest eine Führungsfläche für eine Führungsvorrichtung 146 des Förderfahrzeuges (Fig. 16) aus. Nach gezeigter Ausführung bildet der Führungssteg 110 einander gegenüberliegende Führungsflächen 113 (Fig. 7) aus, an welchen Führungsräder 114 abrollbar anliegen.

Der untere Profilflansch 64, siehe Fig. 7, umfasst einen horizontalen Profilschenkel 65 und einen von diesem abgewinkelten vertikalen Profilschenkel 115.

Die vorderen Längstraversen 14, 17 weisen, wie oben beschrieben, am horizontalen Profilschenkel 65 den Montageabschnitt 66, 76 auf, in welchem Montageschnittstellen 67, insbesondere in einem Rasterabstand angeordnete Montagebohrungen vorbereitet sind und eine horizontale Montageebene 68 ausgebildet ist.

Der Profilsteg 55 ist durch einen vertikalen unteren Profilschenkel 116 und einen von diesem in Richtung zum oberen Profilflansch 53 abgewinkelten oberen Profilschenkel 54 gebildet.

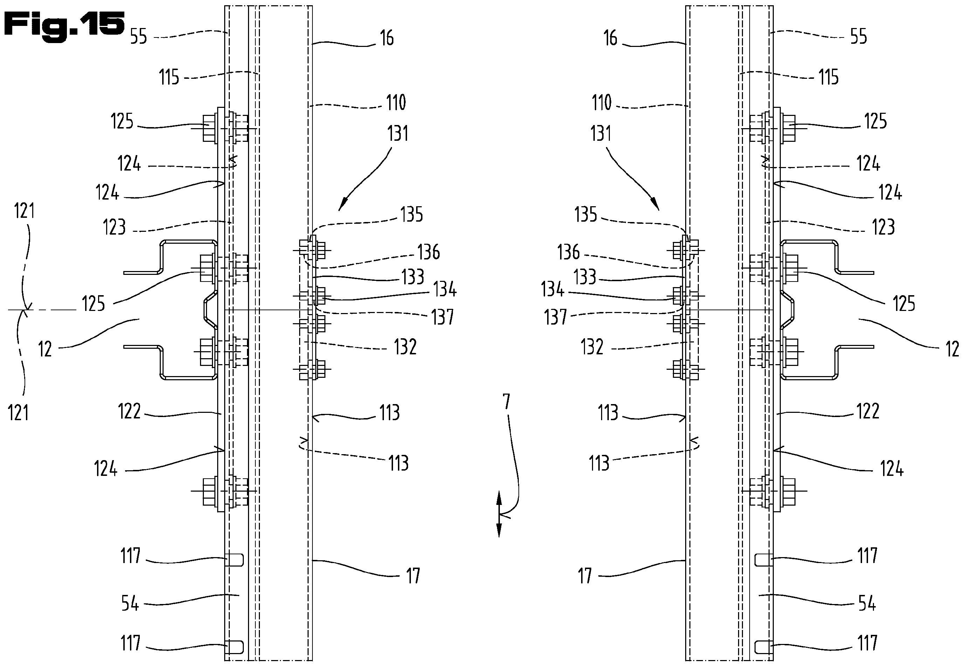

Gemäß der gezeigten Ausführung in Fig. 2, bilden die vorderen Längstraversen 14, 17 jeweils vom abgewinkelten oberen Profilflansch 53 bis in den vertikalen unteren Profilschenkel 116 schlitzförmige Ausnehmungen 117 (Fig. 15, 16) aus, in welche die Querträger 20 des Lageregals 6a, 6b einhängbar bzw. einhakbar sind, wie in Fig. 16 noch näher beschrieben wird. Die schlitzförmigen Ausnehmungen 117 sind in regelmäßigen Abständen entlang der Längstraversen 14, 17 angeordnet. Die vorderen Längstraversen 16 müssen nicht mit derartigen schlitzförmigen Ausnehmungen 117 versehen werden, da diese im Umsetzbereich 21 verlaufen, daher in einem Längenabschnitt der Regalgasse 7, wo keine Stellplätze 11 für Ladegüter 2 ausgebildet sind.

Wie in Fig. 16 ersichtlich, ist zumindest eine der vorderen Längstraversen 14, 16, 17 mit einem elektrischen Energieversorgungssystem 118 ausgestattet. Das Energieversorgungssystem 118 erstreckt sich im Wesentlichen über die gesamte Länge der Regalgasse 7. Das mobile Förderfahrzeug 3 wird während der Fahrbewegung entlang der Regalgasse 7 mit dem Energieversorgungssystem 118 mit elektrischer Energie versorgt. Im Nachfolgen wird auf das Energieversorgungssystem 118 Bezug genommen, wenngleich es auch möglich, dass ein Energie- und Datenversorgungssystem vorgesehen wird, wie oben beschrieben.

Das Energieversorgungssystem 118 umfasst einen Grundträger 119 und parallel nebeneinander liegend in Längsrichtung der Längstraverse 14, 16, 17 verlaufende (bandartige) Schleifleitungen 120. Der Grundträger 119 bildet einen Isolationskörper, beispielweise aus Kunststoff, aus, in welchem die Schleifleitungen 120 so eingebettet sind, dass diese vom Material des Isolationskörpers bis auf die für eine Stromabnahme vorgesehene Kontaktfläche umschlossen sind.

Das Energieversorgungssystem 118 ist über den Grundträger 119 beispielweise an der Längstraverse 17 befestigt, wie in Fig. 16 näher dargestellt. Wie gezeigt, umfasst der Grundträger 120 eine in Längsrichtung der Längstraverse 17 verlaufende (daher parallel zur Fahrrichtung des Förderfahrzeuges 3) Aufnahmenut, über welche das erste Energieversorgungssystem 118 bzw. Energie- und/oder Datenversorgungssystem auf einem vertikalen Profilschenkel 115 der Längstraverse 17 montierbar, insbesondere aufsteckbar ist.

Das Energieversorgungssystem 85 auf der Aufnahmevorrichtung 80 und das Energieversorgungssystem 118 im Regallager können demnach grundsätzlich identisch aufgebaut werden.

Eine beispielhafte Ausführung für die Anordnung eines Energieversorgungssystems 118 und dessen konstruktiver Aufbau sind in der österreichischen Patentanmeldung AT 510 918 offenbart.

Wie in den Fig. 6, 7 und 14 weiter ersichtlich, ist die vordere Längstraverse 16 mit ihren einander gegenüberliegenden Stirnenden 121 über die Verbindungsvorrichtungen 108 mit den vorderen Regalstehern 12 verbunden.

Die Verbindungsvorrichtung 108 umfasst eine erste Verbindungsplatte 122 und eine zweite Verbindungsplatte 123, welche zu beiden Seiten des Profilsteges 55 und gegen dessen einander abgewandte Seitenflächen 124 (Fig. 7) anliegend angeordnet sowie über Verbindungsmittel 125, beispielweise Schrauben, Bolzen, Stifte und dgl., miteinander und mit einem der vorderen Regalsteher 12 verbunden sind.

Die vordere Längstraverse 16 ist in ihrem Profilsteg 55 mit Durchgangsöffnungen 126 versehen, wobei die Verbindungsmittel 125 mit einem zylindrischen Schaftabschnitt die Durchgangsöffnungen 126 durchragen. Die Verbindungsmittel 125 sind mit dem vorderen Regalsteher 12 ortsfest verbunden. Hierzu ist der Regalsteher 12 mit Durchgangsöffnungen, wie zylindrische Bohrungen versehen, welche vom zylindrischen Schaftabschnitt der Verbindungsmittel 125 durchsetzt werden.

Ebenso umfasst die erste Verbindungsplatte 122 Durchgangsöffnungen 127 und die zweite Verbindungsplatte 123 Durchgangsöffnungen 128. Die Anzahl der Durchgangsöffnungen 126, 127, 128 bzw. Verbindungsmittel 125 wird abhängig von den zu übertragenden statischen und dynamischen Kräften gewählt, wobei die Anzahl der Durchgangsöffnungen 126, 127, 128 in der Längstraverse 16 und den Verbindungsplatten 122, 123 korrespondieren. Die Durchgangsöffnungen 126, 127, 128 werden vom zylindrischen Schaftabschnitt des jeweiligen (ortsfesten) Verbindungsmittels 125 durchsetzt.

Es erweist sich auch von Vorteil, wenn zumindest die Durchgangsöffnungen 126 in der vorderen Längstraverse 16 derart ausgebildet sind, dass eine Verlagerungsbewegung der vorderen Längstraverse 16 in dessen Längsrichtung relativ zum Verbindungsmittel 125 möglich ist.

Nach gezeigter Ausführung sind die Durchgangsöffnungen 126 durch sich parallel zur Längsrichtung der Längstraverse 16 erstreckende Langlochausnehmungen gebildet. Ein Schaftquerschnitt des Verbindungsmittels 125 entspricht dabei im Wesentlichen der Breite der Durchgangsöffnung 126, ist aber kleiner als eine Länge der Durchgangsöffnung 126, sodass auf der Verlagerungsbewegung eine vertikale Führung der vorderen Längstraverse 16 erreicht wird. Auf diese Weise, können die vorderen Längstraversen 16 in horizontaler Richtung relativ zu den Regalstehern 12 und in der jeweiligen Regalebene 10 relativ zueinander positioniert werden, sodass die Stirnenden der Längstraversen 16 mit ausreichend hoher Genauigkeit in einer Vertikalebene verlaufen.

Andererseits kann die Längsachse der Langlochausnehmungen auch schräg zur Lauffläche 111 verlaufen. Die Längsachse und die Lauffläche 111 schließen dabei einen von 90° zur Lauffläche 111 abweichenden Winkel ein. Auf diese Weise, können die vorderen Längstraversen 16 in vertikaler und horizontaler Richtung relativ zu den Regalstehern 12 und in der jeweiligen Regalebene 10 relativ zueinander positioniert werden, sodass die Laufflächen 111 einander gegenüberliegender Längstraversen 16 exakt in einer Horizontalebene und die Stirnenden der Längstraversen 16 mit ausreichend hoher Genauigkeit in einer Vertikalebene verlaufen.

Es ist aber auch eine Ausführung denkbar, bei der ein Schaftquerschnitt des Verbindungsmittels 125 kleiner ist als ein Durchmesser bzw. Breite der Durchgangsöffnung 126, welche als zylindrische Bohrung oder Langloch gestaltet sein kann.

Die Durchgangsöffnungen 127 in der ersten Verbindungsplatte 122 sind nach gezeigter Ausführung ebenfalls durch sich parallel zur Längsrichtung der Längstraverse 16 erstreckende Langlochausnehmungen gebildet.

Die Durchgangsöffnungen 128 in der zweiten Verbindungsplatte 123 sind nach gezeigter Ausführung durch zylindrische Bohrungen gebildet.

Die Durchgangsöffnungen 127 und/oder Durchgangsöffnungen 128 können in der Art und Weise gestaltet werden, wie die Durchgangsöffnungen 126.

Im montierten Zustand (Fig. 6) ist die erste Verbindungsplatte 122 zwischen dem vorderen Regalsteher 12 und dem Profilsteg 55 angeordnet und liegt mit seinen einander gegenüberliegenden Seitenflächen einerseits an einer der Längstraverse 16 zugewandten äußeren Seitenfläche des Regalstehers 12 und andererseits an einer dem Regalsteher 12 zugewandten äußeren Seitenfläche des Profilsteges 55 an. Die zweite Verbindungsplatte 123 ist innerhalb des Profilquerschnittes der Längstraverse 16 angeordnet und liegt mit ihrer dem Profilsteg 55 zugewandten Seitenfläche an einer inneren Seitenfläche des Profilsteges 55 an.

Die Kraftübertragung erfolgt demnach durch Reibungskräfte in den Berührungsflächen bzw. Seitenflächen. Die Reibungskräfte können erhöht werden, wenn die Verbindungsmittel 125 als Spannmittel, insbesondere Spannschrauben gestaltet sind und die Verbindungsplatten 122, 123 gegen die Seitenflächen des Profilsteges 55 mit einer Vorspannkraft anliegen.

Wie in Fig. 2 ersichtlich, sind auch die vorderen Längstraversen 14, 17 mit ihren einander gegenüberliegenden Stirnenden 121 über die beschriebene Verbindungsvorrichtung 108 mit den vorderen Regalstehern 12 verbunden.

Wie in den Fig. ersichtlich, kann die erste Verbindungsplatte 122 auch den ersten Wandteil 50 umfassen, welcher im montierten Zustand (Fig. 6) an der Lauffläche 111 der Längstraversen 16 vorragt und damit als Durchschubsicherung dienen kann. Damit kann bei einer Fehlfunktion des Förderfahrzeuges 3 bzw. einer dieses aufweisenden Lastaufnahmevorrichtung 129 (Fig. 10) zum Ein- bzw. Auslagern von Ladegütern 2 bzw. Manipulation zwischen der Umsetzvorrichtung 27, 41 und dem Förderfahrzeug 3 vermieden werden, dass ein Ladegut 2, welches an der zur Manipulation von Ladegütern 2 zwischen der Umsetzvorrichtung 27 und dem Förderfahrzeug 3 festgelegten Übergabe- bzw. Übernahmeposition 130 bewegt werden muss, an einer falschen Position relativ zur Regalgasse 7 manipuliert wird. Damit kann eine Beschädigung der Ladegut-Manipulationsvorrichtung 4, 5 ausgeschlossen werden.

Gemäß der Ausführung in Fig. 15 ist eine Stoßverbindung zwischen in Richtung der Regalgasse 7 hintereinander verlegter vorderen Längstraversen 16, 17 gezeigt. Die erste Verbindungsplatte 122 ist jedoch in diesem Fall ohne den Wandteil 50 gestaltet.

Es erweist sich auch von Vorteil, wenn die paarweise in Richtung der Regalgasse 7 in der jeweiligen Regalebene 10 hintereinander verlaufenden vorderen Längstraversen 16, 17 jeweils zusätzlich zur ersten Verbindungsvorrichtung 108 über eine zweite Verbindungsvorrichtung 131 miteinander verbunden werden.

Die zweite Verbindungsvorrichtung 131 umfasst wiederum eine erste Verbindungsplatte 132 und eine zweite Verbindungsplatte 133, welche zu beiden Seiten des Führungssteges 110 der Längstraversen 16, 17 und gegen dessen einander abgewandte Seitenflächen bzw. Führungsflächen 113 (Fig. 7) anliegend angeordnet sowie über Verbindungsmittel 134, beispielweise Schrauben, Bolzen, Stifte und dgl., miteinander verbunden sind. Wie aus den Fig. ersichtlich, verlaufen der Führungssteg 110 und der vertikale Profilschenkel 115 mit gegenseitigem Abstand zueinander parallel. Bevorzugt ist der Führungssteg 110 vom Profilsteg 55 weiter entfernt wie der Profilschenkel 115, sodass auch nach der Montage der Längstraversen 14, 16, 17 die Verbindungsplatten 132, 133 von unten einfach am Führungssteg 110 montiert werden können.

Die vorderen Längstraversen 16, 17 sind in ihren einander zugewandten Endbereichen am Führungssteg 110 jeweils mit Durchgangsöffnungen 135 versehen, wobei die Verbindungsmittel 134 mit einem zylindrischen Schaftabschnitt die Durchgangsöffnungen 135 durchragt.

Ebenso umfasst die erste Verbindungsplatte 132 Durchgangsöffnungen 136 und die zweite Verbindungsplatte 133 Durchgangsöffnungen 137. Die Anzahl der Durchgangsöffnungen 135, 136, 137 bzw. Verbindungsmittel 134 wird abhängig von den zu übertragenden statischen und dynamischen Kräften gewählt, wobei die Anzahl der Durchgangsöffnungen 135, 136, 137 in der Längstraverse 16, 17 und den Verbindungsplatten 132, 133 korrespondieren. Die Durchgangsöffnungen 135, 136, 137 werden vom zylindrischen Schaftabschnitt des jeweiligen Verbindungsmittels 134 durchsetzt.

Es erweist sich auch von Vorteil, wenn zumindest die Durchgangsöffnungen 136 in den vorderen Längstraversen 16, 17 derart ausgebildet sind, dass eine Verlagerungsbewegung der vorderen Längstraversen 16, 17 in dessen Längsrichtung relativ zum Verbindungsmittel 134 möglich ist.

Nach gezeigter Ausführung sind die Durchgangsöffnungen 135 durch sich parallel zur Längsrichtung der Längstraverse 16, 17 erstreckende Langlochausnehmungen gebildet. Ein Schaftquerschnitt des Verbindungsmittels 134 entspricht dabei im Wesentlichen der Breite der Durchgangsöffnung 135, ist aber kleiner als eine Länge der Durchgangsöffnung 135, sodass auf der Verlagerungsbewegung eine vertikale Führung der vorderen Längstraverse 16, 17 erreicht wird.

Andererseits kann die Längsachse der Langlochausnehmungen auch schräg zur Lauffläche 111 verlaufen, wie oben beschrieben.

Es ist aber auch eine Ausführung denkbar, bei der ein Schaftquerschnitt des Verbindungsmittels 134 kleiner ist als ein Durchmesser bzw. Breite der Durchgangsöffnung 135, welche als zylindrische Bohrung oder Langloch gestaltet sein kann.

Die Durchgangsöffnungen 136, 137 in der ersten Verbindungsplatte 132 und zweiten Verbindungsplatte 133 sind nach gezeigter Ausführung jeweils durch zylindrische Bohrungen gebildet.

Die Durchgangsöffnungen 136 und/oder Durchgangsöffnungen 137 können in der Art und Weise gestaltet werden, wie die Durchgangsöffnungen 135.

Im montierten Zustand liegt die erste Verbindungsplatte 132 mit ihrer dem Führungssteg 110 zugewandten Seitenflächen gegen die äußere Seitenfläche 113 des Führungssteges 110 und die zweite Verbindungsplatte 133 mit ihrer dem Führungssteg 110 zugewandten Seitenflächen gegen die innere Seitenfläche 113 des Führungssteges 110 an. Die zweite Verbindungsplatte 133 ist innerhalb des Profilquerschnittes der Längstraversen 16, 17 angeordnet.

Die Kraftübertragung erfolgt demnach durch Reibungskräfte in den Berührungsflächen bzw. Seitenflächen. Die Reibungskräfte können erhöht werden, wenn die Verbindungsmittel 134 als Spannmittel, insbesondere Spannschrauben gestaltet sind und die Verbindungsplatten 132, 133 gegen die Seitenflächen 113 des Führungssteges 110 mit einer Vorspannkraft anliegen.

Auch wenn die in den Fig. gezeigte Verbindungsvorrichtung 108 Verbindungsplatten 122, 123 zeigt, welche am Stirnende der Längstraverse 14, 16, 17 vorragen, ist es auch möglich, dass die nach außen weisenden Stirnkanten der Verbindungsplatten 122, 123 im Wesentlichen bündig mit dem Stirnende 121 der Längstraverse 14, 16, 17 abschließen. In diesem Fall, wird gemäß der Ausführung in Fig. 15 die vordere erste Längstraverse 16 und vordere zweite Längstraverse 17 jeweils über eine oben beschriebene Verbindungsvorrichtung 108 mit dem vorderen Regalsteher 12 verbunden.

In Fig. 16 ist ein Teilabschnitt aus Fig. 3 gezeigt. Wie oben beschrieben, sind die vordere Längstraverse 14, (16, 17) und hintere Längstraverse 15 über die Querträger 20 verbunden. Die vordere Längstraverse 14, (16, 17) umfasst die in Längsrichtung der Längstraverse 14, (16, 17) mit gegenseitigem Abstand angeordneten schlitzförmigen Ausnehmungen 117 (Fig. 15). Ebenso umfasst auch die hintere Längstraverse 15 in Längsrichtung mit gegenseitigem Abstand angeordnete schlitzförmige Ausnehmungen 138. Die schlitzförmigen Ausnehmungen 138 erstrecken sich jeweils von einem horizontalen oberen Profilflansch 139 bis in einen von diesem nach unten abgewinkelten vertikalen Profilschenkel 140. Die hintere Längstraverse 15 bildet ferner eine sich in dessen Längsrichtung erstreckende und am oberen Profilflansch 139 nach oben ragende Durchschubsicherung 147 aus. Damit wird verhindert, dass die Ladegüter 3 beim Abgeben auf die Stellplätze 11 am Regalfachende 19 nach hinten herausfallen.

Der Querträger 20 ist im Querschnitt im Wesentlichen U-förmig und bildet eine Basis mit einer Lagerfläche 141 und von dieser vorragende Schenkel 142 aus. Die Basis liegt mit ihrer Innenseite auf dem horizontalen Profilflansch 139 auf, sodass die Lagerfläche 141 oberhalb des Profilflansches 139 verläuft. Die Schenkel 142 sind an ihren Enden mit jeweils einem von diesen abgewinkelten Endabschnitt 143 versehen, welche in den Ausnehmungen 117 am Rand vorspringende Rastvorsprünge 144 formschlüssig hintergreifen. Der Querträger 20 ist an den Schenkeln 142 in den gegenüberliegenden Endbereichen mit fensterartigen Öffnungen 145 versehen, über welche ein Zugang zur Rastverbindung für ein Werkzeug möglich und die Rastverbindung zwischen den Längstraversen 14, 15, (16, 17) und Querträger 20 entriegelbar ist.

Abschließend sei auch noch erwähnt, dass die Längstraversen 84 der Aufnahmevorrichtung 80 denselben Profilquerschnitt wie die vorderen Längstraversen 14, (16, 17) ausbilden. Die Längstraverse 84, siehe Fig. 12, umfasst den Profilsteg 96, einen von diesem abgewinkelten horizontalen oberen Profilflansch, einen vom Profilsteg 96 abgewinkelten unteren Profilflansch und einen vom oberen Profilflansch abgewinkelten Führungssteg. Der obere Profilflansch bildet eine horizontale Lauffläche für Laufräder 112 des Förderfahrzeuges (Fig. 3) und der Führungssteg einander gegenüberliegende Führungsflächen für eine Führungsvorrichtung 146 des Förderfahrzeuges (Fig. 16) aus. Der untere Profilflansch umfasst den horizontalen Profilschenkel 98 und den von diesem abgewinkelten vertikalen Profilschenkel 92.

Wie aus dem oben Beschriebenen hervorgeht, bilden beispielweise die Umsetzvorrichtungen 27, die Pufferfördervorrichtungen 57, die Verriegelungselemente 74 und/oder die Förderfahrzeug-Hebevorrichtung 77 jeweils Funktionszusatzmodule, welche zumindest einen dem Montageabschnitt 66, 69, 76 der hinteren und/oder vorderen Längstraversen 14, 15, 16, 17 zugewandten Montageabschnitt ausbilden. Der Montageabschnitt 150 des jeweiligen Funktionszusatzmodules ist beispielweise von dem zumindest einen Tragholm 61, auf welchem die Umsetzvorrichtung 27 gelagert ist, dem zumindest einen Tragholm 61, auf welchem die Pufferfördervorrichtung 57 gelagert ist, der Tragplatte 73, auf welchem zumindest ein Verriegelungselement 74 gelagert ist, und/oder dem Führungsrahmen 78, insbesondere den Rahmenteilen 81a, 81b gebildet. Das jeweilige Funktionszusatzmodul ist über den Montageabschnitt 150 direkt an die horizontale oder vertikale Montageebene 68, 149 anlegbar und über Verbindungsmittel 63, beispielweise Befestigungsschrauben mit dem Montageabschnitt 66, 69, 76 der hinteren und/oder vorderen Längstraverse 14, 15, 16, 17 verbindbar. Auch ist es möglich, dass das jeweilige Funktionszusatzmodul über den Montageabschnitt 150 direkt sowohl an die horizontale als auch vertikale Montageebene 68, 149 angelegt und über Verbindungsmittel 63 in den Montageabschnitten 66, 69, 76 mit der hinteren und/oder vorderen Längstraverse 14, 15, 16, 17 verbunden wird.

Auch sei noch drauf hingewiesen, dass aus Gründen der besseren Übersicht 1 nur vereinzelt ein Förderfahrzeug 3 dargestellt ist. Üblicherweise werden aber im Regallagersystemen 1 mehrere Förderfahrzeuge 3 (Shuttle), beispielsweise für je drei Regalebenen 10 zumindest ein Förderfahrzeug 3 eingesetzt.

Der Ordnung halber sei abschließend darauf hingewiesen, dass zum besseren Verständnis des Aufbaus des Regallagersystems 1 diese bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Regallagersystem | 36 | Umlaufbahnseite |
| 2 | Ladegüter | 37 | Stellantrieb |
| 3 | Förderfahrzeug | 38 | Fördervorrichtung |
| 4 | Ladegut-Manipulationsvorrichtung | 39 | Basisteil |
| 5 | Ladegut-Manipulationsvorrichtung | 40 | Aufnahmeteil |
| | | | |
| 6 | Lagerregal | 41 | Umlauffördervorrichtung |
| 7 | Regalgasse | 42 | Umsetzvorrichtung |
| 8 | Regallagerseite | 43 | Umsetzvorrichtung |
| 9 | Regallagerseite | 44 | Antrieb |
| 10 | Regalebene | 45 | Überwachungsvorrichtung |
| | | | |
| 11 | Stellplatz | 46 | Sensor |
| 12 | vorderer Regalsteher | 47 | Leitungsführungskanal |
| 13 | hinterer Regalsteher | 48 | Kabelkanal |
| 14 | vordere Längstraverse | 49 | Verbindungsleitung |
| 15 | hintere Längstraverse | 50 | Wandteil |
| | | | |
| 16 | vordere Längstraverse | 51 | Wandteil |
| 17 | vordere Längstraverse | 52 | Schraube |
| 18 | Bedienseite | 53 | oberen Profilflansch |
| 19 | Regalfachende | 54 | Profilschenkel |
| 20 | Querträger | 55 | Profilsteg |
| | | | |
| 21 | Umsetzbereich | 56 | Pufferzone |
| 22 | Einlagerungs-Verteilsystem | 57 | Pufferfördervorrichtung |
| 23 | Auslagerung-Verteilsystem | 58 | Pufferplatz |
| 24 | Einlagerungsbahn | 59 | Tragrahmen |
| 25 | Auslagerungsbahn | 60 | Förderorgan |
| | | | |
| 26 | Umlauffördervorrichtung | 61 | Tragholm |
| 27 | Umsetzvorrichtung | 62 | Verbindungsmittel |
| 28 | Umsetzvorrichtung | 63 | Verbindungsmittel |
| 29 | Tragrahmen | 64 | unteren Profilflansch |
| 30 | Umlaufbahnabschnitt | 65 | Profilschenkel |
| | | | |
| 31 | Umlaufbahnabschnitt | 66 | Montageabschnitt |
| 32 | Umlaufbahnseite | 67 | Montageschnittstelle |
| 33 | Stellantrieb | 68 | Montageebene |
| 34 | Aufnahmerahmen | 69 | Montageabschnitt |
| 35 | Aufnahmeteil | 70 | Verriegelungsvorrichtung |
| 71 | Grundrahmen | 111 | Lauffläche |
| 72 | Verriegelungselement | 112 | Laufrad |
| 73 | Tragplatte | 113 | Führungsfläche |
| 74 | Verriegelungselement | 114 | Führungsrad |
| 75 | Verbindungsmittel | 115 | Profilschenkel |
| | | | |
| 76 | Montageabschnitt | 116 | Profilschenkel |
| 77 | Förderfahrzeug-Hebevorrichtung | 117 | Ausnehmung |
| 78 | Führungsrahmen | 118 | Energieversorgungssystem |
| 79 | Hubrahmen | 119 | Grundträger |
| 80 | Aufnahmevorrichtung | 120 | Schleifleitung |
| | | | |
| 81 | Rahmenteil | 121 | Stirnende |
| 82 | Traverse | 122 | Verbindungsplatte |
| 83 | Zugmittel | 123 | Verbindungsplatte |
| 84 | Längstraverse | 124 | Seitenfläche |
| 85 | Energieversorgungssystem | 125 | Verbindungsmittel |
| | | | |
| 86 | Stirnende | 126 | Durchgangsöffnung |
| 87 | Profilschenkel | 127 | Durchgangsöffnung |
| 88 | Grundträger | 128 | Durchgangsöffnungen |
| 89 | Schleifleitung | 129 | Lastaufnahmevorrichtung |
| 90 | Isolationskörper | 130 | Übergabe- bzw. Übernahmeposition |
| 91 | Aufnahmenut | | |
| 92 | Profilschenkel | 131 | Verbindungsvorrichtung |
| 93 | Befestigungsmittel | 132 | Verbindungsplatte |
| 94 | Versorgungsleitung | 133 | Verbindungsplatte |
| 95 | Halteaufnahme | 134 | Verbindungsmittel |
| | | 135 | Durchgangsöffnung |
| 96 | Profilsteg | | |
| 97 | Durchgangsöffnung | 136 | Durchgangsöffnung |
| 98 | Profilschenkel | 137 | Durchgangsöffnung |
| 99 | Kontaktbügel | 138 | Ausnehmung |
| 100 | elektrischer Leiter | 139 | Profilflansch |
| | | 140 | Profilschenkel |
| 101 | Kontaktfläche | | |
| 102 | Rückenfläche | 141 | Lagerfläche |
| 103 | Ausnehmung | 142 | Schenkel |
| 104 | Fahrmotor | 143 | Endabschnitt |
| 105 | Stromabnehmer | 144 | Rastvorsprung |
| | | 145 | Öffnung |
| 106 | Energieversorgungssystem | | |
| 107 | Verriegelungselement | 146 | Führungsvorrichtung |
| 108 | Verbindungsvorrichtung | 147 | Durchschubsicherung |
| 109 | Profilflansch | 148 | Montageschnittstelle |
| 110 | Führungssteg | 149 | Montageebene |
| | | 150 | Montageabschnitt |

## Patentansprüche

1. Regallagersystem (1) mit
- zumindest einem autonomen Förderfahrzeug (3) zum Transport von Ladegütern (2),
- einem Regallager für die Ladegüter (2) mit einem ersten Lagerregal (6a) und einem zweiten Lagerregal (6b) sowie einer sich zwischen diesen und einander gegenüberliegenden stirnseitigen Regallagerseiten (8, 9) erstreckenden Regalgasse (7), welche Lagerregale (6a, 6b) parallel angeordnet sind und in übereinander liegenden Regalebenen (10) jeweils nebeneinander Stellplätze (11) für die Ladegüter (2) ausbilden,
- einer ersten Ladegut-Manipulationsvorrichtung (4),
- einer zweiten Ladegut-Manipulationsvorrichtung (5), welche Ladegut-Manipulationsvorrichtungen (4, 5) entweder in den Lageregalen (6a, 6b) integriert zwischen den stirnseitigen Regallagerseiten (8, 9) oder stirnseitig an einer oder beiden Regallagerseiten (8, 9) seitlich zur Regalgasse (7) angeordnet sind,
- einer Pufferzone (56) einerseits zwischen der ersten Ladegut-Manipulationsvorrichtung (4) und dem ersten Lagerregal (6a) und andererseits zwischen der zweiten Ladegut-Manipulationsvorrichtung (5) und dem zweiten Lagerregal (6b), welche in der jeweiligen Regalebene (10) und im jeweiligen Lagerregal (6a, 6b) integriert eine automatisierte Pufferfördervorrichtung (57) aufweist, welche als Staurollenbahn, Staugurtförderer und dgl. gestaltet ist, und dessen Förderrichtung parallel zur Regalgasse (7) verläuft sowie einen Pufferplatz (58) für ein Ladegut (2) oder in Förderrichtung hintereinander mehrere Pufferplätze (58) für Ladegüter (2) ausbildet,
- wobei das erste Lagerregal (6a) und das zweite Lagerregal (6b) jeweils der Regalgasse (7) benachbarte, vordere Regalsteher (12) und von der Regalgasse (7) entfernte, hintere Regalsteher (13) sowie in den übereinander liegenden Regalebenen (10) in Richtung der Regalgasse (7) verlaufende vordere und hintere Längstraversen (14, 15, 16, 17) umfassen,
- wobei das autonome Förderfahrzeug (3) zum Transport von Ladegütern (2) zu bzw. von Stellplätzen (11) in den Lagerregalen (6a, 6b) auf den einander gegenüberliegenden, vorderen Längstraversen (14, 16, 17) verfahrbar ist,
- wobei die vorderen und/oder hinteren Längstraversen (14, 15, 16, 17) in Richtung ihrer Längserstreckung zumindest einen Montageabschnitt (66) umfassen, in welchem Montageschnittstellen (67; 148), insbesondere in einem Rasterabstand angeordnete Montagebohrungen oder Aussparungen, vorbereitet sind, und eine horizontale oder vertikale Montageebene (68; 149) für die Pufferfördervorrichtung (57) ausgebildet ist,
**dadurch gekennzeichnet, dass**
- die Pufferfördervorrichtung (57) einen Tragrahmen (59) und je Pufferplatz (58) zumindest ein am Tragrahmen (59) gelagertes, antreibbares Förderorgan (60), beispielweise ein Förderband, oder eine Vielzahl von antreibbaren Förderorganen, beispielweise Förderrollen, umfasst und mit dem Tragrahmen (59) auf Tragholmen (61) gelagert und über Verbindungsmittel (62), beispielweise Befestigungsschrauben, an den Tragholmen (61) bevorzugt lösbar befestigt ist, und dass
- die Tragholme (61) mit ihren einander gegenüberliegenden Enden über Verbindungsmittel (63), beispielweise Befestigungsschrauben, an den vorderen Längstraversen (14) und/oder hinteren Längstraversen (15) direkt mit dem Montageabschnitt (66) lösbar befestigt sind, sodass
- das gesamte Regallagersystem modular aufgebaut ist und die Pufferfördervorrichtung (57) in der jeweiligen Regalebene (10) über die Tragholme (61) ausschließlich an der jeweiligen vorderen und/oder hinteren Längstraverse (14, 15, 16, 17) befestigt ist.

2. Regallagersystem nach Anspruch 1, **dadurch gekennzeichnet, dass** die vorderen Längstraversen (14; 16; 17) jeweils einen Profilsteg (55), einen vom Profilsteg (55) abgewinkelten horizontalen oberen Profilflansch (53) und einen vom Profilsteg (55) abgewinkelten unteren Profilflansch (64) und einen vom oberen Profilflansch (53) abgewinkelten Führungssteg (110) umfassen, wobei der obere Profilflansch (53) eine Lauffläche (111) für Laufräder (112) des Förderfahrzeuges (3) und der Führungssteg (110) zumindest eine Führungsfläche (113) für eine Führungsvorrichtung (146) des Förderfahrzeuges (3) ausbilden.

3. Regallagersystem nach Anspruch 2, **dadurch gekennzeichnet, dass** der Profilsteg (55) und/oder der untere Profilflansch (64) an einem horizontalen Profilschenkel (65) zumindest einen Montageabschnitt (66, 76) umfasst.

4. Regallagersystem nach Anspruch 2 oder 3, **dadurch gekennzeichnet, dass** der untere Profilflansch (64) ferner einen vertikalen Profilschenkel (115) umfasst, auf dessen freiem Ende ein Energieversorgungssystem (118), insbesondere eine Schleifleitungsanordnung montierbar ist.

5. Regallagersystem nach einem der Ansprüche 2 bis 4, **dadurch gekennzeichnet, dass** der Profilsteg (55) einen vertikalen unteren Profilschenkel (116) und einen von diesem in Richtung zum oberen Profilflansch (53) abgewinkelten oberen Profilschenkel (54) ausbildet, wobei sich vom abgewinkelten oberen Profilflansch (53) bis in den vertikalen unteren Profilschenkel (116) schlitzförmige Ausnehmungen (117) erstrecken, in welche Querträger (20) des Lageregals (6a, 6b) einhängbar sind.

6. Regallagersystem nach einem der Ansprüche 1 bis 5, **dadurch gekennzeichnet, dass** die vorderen Längstraversen (14, 16, 17) der Lagerregale (6a, 6b) über eine erste Verbindungsvorrichtung (108) an ihren einander zugewandten Stirnenden (121) miteinander oder zumindest an einem ihrer einander gegenüberliegenden Stirnenden (121) mit den vorderen Regalstehern (12) verbunden sind und jeweils einen Profilsteg (55) aufweisen, welche Verbindungsvorrichtung (108) eine erste Verbindungsplatte (122) und eine zweite Verbindungsplatte (123) umfasst, welche zu beiden Seiten des Profilsteges (55) und gegen dessen einander abgewandte Seitenflächen (124) anliegend angeordnet sowie über Verbindungsmittel (125) miteinander verbunden sind.

## Claims

1. A rack storage system (1) having
- at least one autonomous conveyor vehicle (3) for transporting goods (2),
- a rack store for the goods (2), having a first storage rack (6a) and a second storage rack (6b) and a rack aisle (7) extending between said storage racks and between mutually opposing rack store front sides (8, 9), which storage racks (6a, 6b) are arranged parallel and form spaces (11), next to one another in rack levels (10) lying one above the other, for the goods (2),
- a first goods manipulation device (4),
- a second goods manipulation device (5), which goods manipulation devices (4, 5) are either integrated in the storage racks (6a, 6b) between the rack store end sides (8, 9) or arranged on the front side of one or both rack store sides (8, 9) to the side of the rack aisle (7),
- a buffer zone (56) between the first goods manipulation device (4) and the first storage rack (6a) on the one side and between the second goods manipulation device (5) and the second storage rack (6b) on the other side, which has an automated buffer conveyor device (57) integrated in the respective rack level (10) and in the respective storage rack (6a, 6b), which buffer conveyor device is in the form of an accumulation roller conveyor, accumulation belt conveyor and the like, and the conveying direction of which runs parallel to the rack aisle (7) and forms a buffer space (58) for goods (2) or multiple buffer spaces (58), one behind the other in the conveying direction, for goods (2),
- the first storage rack (6a) and the second storage rack (6b) each comprising front rack posts (12) adjacent to the rack aisle (7), rear rack posts (13) remote from the rack aisle (7), and front and rear longitudinal beams (14, 15, 16, 17) extending in the direction of the rack aisle (7) in the rack levels (10) lying one above the other,
- the autonomous conveyor vehicle (3) being drivable on the mutually opposing front longitudinal beams (14, 16, 17) to transport goods (2) to and from spaces (11) in the storage racks (6a, 6b),
- the front and/or rear longitudinal beams (14, 15, 16, 17) comprising, in the direction of the longitudinal extent thereof, at least one mounting section (66) in which mounting interfaces (67; 148), in particular mounting bores or cut-outs arranged in a grid, are made, and a horizontal or vertical mounting plane (68; 149) for the buffer conveyor device (57) is formed,
**characterised in that**
- the buffer conveyor device (57) comprises a supporting frame (59) and, for each buffer space (58), at least one drivable conveying member (60) mounted on the supporting frame (59), for example a conveyor belt, or a plurality of drivable conveying members, for example conveyor rollers, and is mounted by the supporting frame (59) on supporting arms (61) and is fastened, preferably detachably, to the supporting arms (61) via connecting means (62), for example screw-fastenings, and
- the supporting arms (61) are detachably fastened at their mutually opposing ends to the front longitudinal beams (14) and/or rear longitudinal beams (15) directly to the mounting section (66) via connecting means (63), for example screw-fastenings, so that
- the entire rack storage system has a modular construction, and the buffer conveyor device (57) in the respective rack level (10) is fastened via the supporting arms (61) solely to the respective front and/or rear longitudinal beam (14, 15, 16, 17).

2. The rack storage system according to claim 1, **characterised in that** the front longitudinal beams (14; 16; 17) each comprise a profile web (55), a horizontal upper profile flange (53) which is angled from the profile web (55), a lower profile flange (64) which is angled from the profile web (55), and a guide web (110) which is angled from the upper profile flange (53), wherein the upper profile flange (53) forms a running surface (111) for wheels (112) of the conveyor vehicle (3), and the guide web (110) forms at least one guide face (113) for a guide device (146) of the conveyor vehicle (3).

3. The rack storage system according to claim 2, **characterised in that** the profile web (55) and/or the lower profile flange (64) on a horizontal profile side (65) comprises at least one mounting section (66, 76).

4. The rack storage system according to claim 2 or 3, **characterised in that** the lower profile flange (64) also comprises a vertical profile leg (115), on the free end of which an energy supply system (118), in particular a conductor line arrangement, can be mounted.

5. The rack storage system according to any one of claims 2 to 4, **characterised in that** the profile web (55) forms a vertical lower profile piece (116) and, angled from the latter towards the upper profile flange (53), an upper profile leg (54), wherein slot-like cut-outs (117) extend from the angled upper profile flange (53) into the vertical lower profile piece (116), into which cut-outs cross beams (20) of the storage rack (6a, 6b) can be hung.

6. The rack storage system according to any one of claims 1 to 5, **characterised in that** the front longitudinal beams (14, 16, 17) of the storage racks (6a, 6b) are connected via a first connecting device (108) to each other at their mutually facing front ends (121) or to the front rack posts (12) at least at one of their mutually opposing front ends (121) and each have a profile web (55), which connecting device (108) comprises a first connecting plate (122) and a second connecting plate (123) which are arranged on both sides of the profile web (55) and bear against its side faces (124) facing away from each other, and are connected to each other via connecting means (125).

## Revendications

1. Système de stockage à rayonnages (1) avec
- au moins un véhicule de convoyage autonome (3) pour le transport de marchandises (2),
- un stockage à étagères pour les marchandises (2) avec un premier rayonnage (6a) et un deuxième rayonnage (6b), ainsi qu'une allée de rayonnages (7) s'étendant entre ceux-ci et des côtés de rayonnages frontaux (8, 9) opposés, ces rayonnages (6a, 6b) étant disposés parallèlement et constituant, dans des plans de rayonnages (10) superposés des emplacements (11) juxtaposés pour les marchandises (2),
- un premier dispositif de manipulation de marchandises (4),
- un deuxième dispositif de manipulation de marchandises (5), ces dispositifs de manipulation de marchandises (4, 5) étant soit disposés dans les rayonnages (6a, 6b) de manière à être intégrés entre les côtés de rayonnages frontaux (8, 9) soit disposés sur un ou les deux côtés de rayonnages (8, 9) sur le côté de l'allée de rayonnages (7),
- une zone tampon (56) d'une part entre le premier dispositif de manipulation de marchandises (4) et le premier rayonnage (6a) et d'autre part entre le deuxième dispositif de manipulation de marchandises (5) et le deuxième rayonnage (6b), qui comprend, intégré dans le plan de rayonnage (10) correspondant et dans le rayonnage (6a, 6b) correspondant, un dispositif de convoyage tampon automatisé (57) qui est conçu comme une bande d'accumulation à rouleaux, un convoyeur d'accumulation à courroie et autres, et dont la direction de convoyage s'étend parallèlement à l'allée de rayonnages (7) et forme un emplacement tampon (58) pour une marchandise (2) ou plusieurs emplacements tampons (58) pour marchandises (2) les uns derrière les autres dans la direction de convoyage,
- le premier rayonnage (6a) et le deuxième rayonnage (6b) comprennent des montants d'étagères avant (12), adjacents à l'allée de rayonnages (7) et des montants d'étagères arrière (13) éloignés de l'allée de rayonnages (7), ainsi que des traverses longitudinales avant et arrière (14, 15, 16, 17) s'étendant dans les plans d'étagères (10) superposés en direction de l'allée de rayonnages (7),
- le véhicule de convoyage autonome (3) pouvant être déplacé pour le transport de marchandises (2) vers et à partir des emplacements (11) dans les rayonnages (6a, 6b) sur les traverses longitudinales avant (14, 16, 17) opposées entre elles,
- les traverses longitudinales avant et/ou arrière (14, 15, 16, 17) comprenant, en direction de leur extension longitudinale, au moins une portion de montage (66) dans laquelle des interfaces de montage (67 ; 148), plus particulièrement des alésages de montage ou des évidements disposés à intervalles réguliers, sont préparés, et un plan de montage horizontal ou vertical (68 ; 149) est réalisé pour le dispositif de convoyage tampon (57), **caractérisé en ce que**
- le dispositif de convoyage tampon (57) comprend un châssis porteur (59) et, pour chaque emplacement tampon (58), au moins un organe de convoyage (60) entraînable logé sur le châssis porteur (59), par exemple un convoyeur à bande ou une pluralité d'organes de convoyage entraînables, par exemple des rouleaux de convoyage et est logé avec le châssis porteur (59) sur des longerons porteurs (61) et est fixé de préférence de manière amovible, par l'intermédiaire de moyens de liaison (62), par exemple des vis de fixation, aux longerons porteurs (61) et
- les longerons porteurs (61) sont fixés de manière amovible, avec leurs extrémités opposées entre elles, par l'intermédiaire de moyens de liaison, par exemple de vis de fixation, sur les traverses longitudinales avant (14) et/ou sur les traverses longitudinales arrière (15), directement avec la portion de montage (66), de façon à ce que
- l'ensemble du système de stockage à rayonnages est conçu de manière modulaire et le dispositif de convoyage tampon (57) est fixé dans le plan d'étagère (10) concerné par l'intermédiaire des longerons porteurs (61), exclusivement à la traverse longitudinale avant et/ou arrière (14, 15, 16, 17) correspondante.

2. Système de stockage à rayonnages selon la revendication 1, **caractérisé en ce que** les traverses longitudinales avant (14 ; 16 ; 17) comprennent chacune une nervure profilée (55), une bride profilée horizontale supérieure (53) formant un angle par rapport à la nervure profilée (55) et une bride profilée inférieure (64) formant un angle par rapport à la nervure profilée (55) et une nervure de guidage (110) formant un angle par rapport à la bride profilée supérieure (53), la bride profilée supérieure (53) comprenant une surface de roulement (111) pour des galets (112) du véhicule de convoyage (3) et la nervure de guidage (110) comprenant au moins une surface de guidage (113) pour un dispositif de guidage (146) du véhicule de convoyage (3).

3. Système de stockage à rayonnages selon la revendication 2, **caractérisé en ce que** la nervure profilée (55) et/ou la bride profilée inférieure (64) comprend, au niveau d'une branche profilée horizontale (65), au moins une portion de montage (66, 76).

4. Système de stockage à rayonnages selon la revendication 2 ou 3, **caractérisé en ce que** la bride profilée inférieure (64) comprend en outre une branche profilée verticale (115) sur l'extrémité libre de laquelle peut être monté un système d'alimentation en énergie (118), plus particulièrement un dispositif à ligne de contact.

5. Système de stockage à rayonnages selon l'une des revendications 2 à 4, **caractérisé en ce que** la nervure profilée (55) comprend une branche profilée verticale inférieure (116) et une branche profilée supérieure (54) formant un angle par rapport à celle-ci en direction de la bride profilée supérieure (53), des évidements (117), en forme de fentes, s'étendant de la bride profilée supérieure (53) jusque dans la branche profilée verticale inférieure (116), dans lesquels des supports transversaux (20) du rayonnage (6a, 6b) peuvent être suspendus.

6. Système de stockage à rayonnages selon l'une des revendications 1 à 5, **caractérisé en ce que** les traverses longitudinales avant (14, 16, 17) des rayonnages (6a, 6b) sont reliées entre elles par l'intermédiaire d'un premier dispositif de liaison (108) au niveau de leurs extrémités frontales (121) orientées les unes vers les autres ou sont reliées au niveau d'une de leurs extrémités frontales (121) opposées avec les montants de rayonnages avant (12) et comprennent chacune une nervure profilée (55), le dispositif de liaison (108) comprenant une première plaque de liaison (122) et une deuxième plaque de liaison (123), qui sont disposées des deux côtés de la nervure profilée (55) et de façon à s'appuyer contre leurs faces latérales opposées (124) et reliées entre elles par l'intermédiaire de moyens de liaison (125).
